# EUROPÄISCHE PATENTSCHRIFT

(11) **EP 2 177 689 B1**
(45) Veröffentlichungstag und Bekanntmachung des Hinweises auf die Patenterteilung: **30.11.2016**
(21) Anmeldenummer: 08405261.2
(22) Anmeldetag: 16.10.2008
(51) Int. Cl.: E04F 19/08, H02G 3/18

(54) **Fassung mit Deckel**
Frame with cover
Cadre doté d'un couvercle

(43) Veröffentlichungstag der Anmeldung: 21.04.2010
(73) Patentinhaber: Breco-Bauelemente AG, St. Gallen, 9010 St. Gallen (CH)
(72) Erfinder: Bregenzer, Dominique, 9010 St. Gallen (CH)
(74) Vertreter: Roshardt, Werner Alfred

(56) Entgegenhaltungen:
- DE-A1- 2 528 951
- DE-U- 7 221 437
- DE-U- 7 302 955
- FR-A- 1 593 664
- US-A- 5 161 339

## Beschreibung

### Technisches Gebiet

Die Erfindung betrifft eine Anordnung mit einer Fassung mit Deckel zur Montage in einer Bodenöffnung, wobei die Fassung zur Halterung eines Einsatzes ausgebildet sein kann, mit einem Durchtritt, welcher bei montierter Fassung einen mit dem Deckel verschliessbaren Zugang zu der Bodenöffnung bildet, wobei bei verschlossenem Durchtritt eine Oberseite des Deckels weitgehend koplanar zu einer die Bodenöffnung aufweisenden Bodenfläche angeordnet ist. Weiter betrifft die Erfindung eine Fassung sowie einen Einbausatz für die oben genannte Anordnung und ein Verfahren zum Einbau der Fassung.

### Stand der Technik

Moderne Gebäudetechnik erfordert beim Innenausbau von Gebäuden (Grossraumbüros, Gewerbegebäuden, Wohnungen etc.) vermehrt einen möglichst variablen und wartungsfreundlichen Zugang zu elektrischen (z.B. Stromnetz, Kommunikations-Netzwerk), aber auch sanitären Leitungen bzw. Verteilerdosen oder Armaturen. Hierbei kommen Bodendosen zur Anwendung, wobei diese Dosen Teil eines Gesamtsystems sind und deren jeweilige Ausführung von den Bodenaufbauarten (z.B. Unterlagsböden, Hohlraumboden oder Doppelboden) abhängig ist.

Gängige Bodendosen umfassen dabei typischerweise einen Einbaurahmen, in welchen bei Bedarf ein Einsatz, wie z.B. eine Verteilerdose, eingesetzt werden kann. Der Einbaurahmen ist dabei auf einer tragenden Konstruktion des Gebäudes (z.B. tragender Betonboden, siehe unten) abgestützt, wobei die Abstützung zur Höhenjustierung über vier an den Ecken des Einbaurahmens vorgesehenen Gewindestangen erfolgt.

Im Stand der Technik gibt es verschiedene Lösungen zum Einbau von Bodendosen für verschiedene Bodenaufbauarten.

### Unterlagsboden

Im Falle eines Unterlagsbodens werden auf den tragenden Boden (Betonboden, Holzbalkenboden, Stahlblechboden etc.) ggf. Trennlagen als Dampfsperre, als Primärisolation zum Schallschutz und/oder als thermische Isolation verlegt. Weiter werden allenfalls eine Bodenisolation, in welche Elektroleerrohre oder Unterflurkanäle integriert werden, verlegt sowie Bodenheizungsrohre auf die Bodenisolation aufgelegt. Da die Einbaurahmen der Bodendosen auf dem tragenden Boden abgestützt werden sollten, ist dabei eine Durchdringung der Trennlagen bzw. Bodenisolation durch die justierbare Abstützung der Bodendose erforderlich. Nach einer Höhenjustierung der Einbaurahmen wird ein Unterlagsboden, z.B. aus Anhydrid oder Zement, vollflächig eingebracht, wobei der Einbaurahmen samt Justiervorrichtung eingegossen wird und der Unterlagsboden von aussen her an den Einbaurahmen heranfliesst.

### Hohlraumboden

Bei einem Hohlraumboden wird eine verlorene Schalung über Abstützungen gegenüber dem tragenden Rohboden auf das gewünschte Niveau gebracht. Dabei werden in die Schalung Ausschnitte eingearbeitet, in welche die auf dem tragenden Rohboden justierbar abgestützte Bodendosenrahmen eingefügt werden. Nach Aufbringen einer Schrenzlage wird die Schalung anschliessend beispielsweise mit einem Anhydridboden auf Endniveau übergossen.

### Doppelboden

Im Falle eines Doppelbodens werden quadratische Bodenplatten mit Fertigbelag mit in der Höhe justierbaren Stützen auf dem tragenden Rohboden abgestützt, wodurch sich ein Hohlraum ergibt. In die Doppelbodenplatten werden Ausschnitte eingearbeitet, in welche die Einbaurahmen der Bodendosen ebenfalls auf dem Rohboden justierbar abgestützt eingefügt werden.

Vordringlichstes Problem bei derartigen bekannten Systemen tritt im Übergang zwischen dem Boden und den Bodendosenrahmen auf. Aufgrund von unvermeidbarer Abweichungen in der Höhenjustierung bilden die Bodendosen eine örtliche Überhöhung oder die Bodendosenabdeckung liegt zu tief, was zu Materialbrüchen oder Ausfransen von Belägen führt und Gehbehinderungen oder Stolperfallen darstellt.

Beispielsweise ist im Falle von Unterlagsböden das Justieren der Dosenrahmen aufwändig und kann nach dem Einbringen des Anhydrids oder Zements nur noch mit grossem baulichen Aufwand korrigiert werden. Besonders nachteilig ist dabei, dass die Höhenjustierung des Bodendosenrahmens zu einem Zeitpunkt zu erfolgen hat, zu welchem der Unterlagsboden noch nicht eingebracht ist, d.h. wenn ein endgültiges Bodenniveau noch gar nicht besteht. Grosse Anhydridböden richten sich beispielsweise nach dem Einbringen beim Abbinden nach der Erdanziehung und verwölben sich, was ein korrektes Ausnivellieren von auf dem tragenden Boden abgestützen Bodendosen kaum möglich macht.

Ebenfalls ist zum Zeitpunkt der Justierung oft nicht bekannt, welche Art von Endbelag auf den Unterlagsboden aufgebracht wird. Bei bekannten Systemen muss der Einbaurahmen auf die jeweilige Bodenaufbauart abgestimmt werden: Unterschiedliche Bodenbeläge wie Teppiche, Filzbeläge, Linoleum, Steinplatten, Feinsteinzeugplatten, Parkett etc. erfordern unterschiedliche Bordhöhen bei den Bodendosenrahmen und Bodendosenabdeckungen. Dies führt einerseits zu einem wirtschaftlich unrentablen grossen Produktesortiment. Zum Anderen kann insbesondere im Falle eines Unterlagsbodens ein Wechsel der Rahmen nur mit grossem Aufwand realisiert werden. Diese Umstände machen in vielen Fällen ein Nacharbeiten unumgänglich. Auch im Falle eines Fertigbodens (Hohlraumboden oder Doppelboden) bleibt das Problem der Wahlfreiheit des Endbelags bis zur fertigen Realisierung und damit zur grösstmöglichen architektonischen Gestaltungsfreiheit bestehen.

Bekannte Bodendosenrahmen versuchen das Problem der Justierung auf Endbelagsniveau durch einen tragenden Flansch zu lösen, an welchem der Bodendosenrahmen von oben her in eine Öffnung im endbelag-belegten Boden gehängt wird. Hierbei ist keine Abstützung auf dem tragenden Rohboden mehr erforderlich, womit sich unter anderem auf vorteilhafte Weise thermische und akustische Isolationsprobleme, welche sich aufgrund der Abstützung der Einbaurahmen ergeben, überwunden werden. Aufgrund des Übergriffs des Endbelags durch den Flansch ist letzterer bei der Belastung bzw. Benutzung des Bodens jedoch stark beansprucht und ermüdet somit rasch (z.B. durch wechselnde Belastung mit schweren Lasten). Insbesondere hat die Bodendose bei elastischen Endbelägen keine definierte Höhe, sondern geht z.B. bei Verwalken des Endbelags mit. Zudem übergreift der tragende Flansch den Endbelag jedoch nur in einem, im Vergleich zur Fläche der Bodendosen, kleinen Bereich, womit sich nur eine vergleichsweise kleine Fläche zur Ableitung der zulässigen Tragkraft der Bodendose auf den umgebenden Boden ergibt. Zum einen muss damit die Bodenöffnung im Verhältnis zum Bodendosenrahmen sehr genau ausgebildet sein, damit die Auflagefläche möglichst gross ist. Zum Anderen muss der Flansch robust und in entsprechender Stärke ausgebildet sein. Damit ergibt sich jedoch eine beträchtliche Überhöhung des Flansches gegenüber dem umgebenden Bodenniveau, womit eine beträchtliche Gehbehinderungen bzw. Stolperfalle besteht.

Die Anmeldung WO 00/60191 A1 der Cabscape Holding schlägt vor, einen tragenden Flansch einer Fassung für einen Deckel bzw. eines Einbaurahmens mit einer sich verjüngenden Kunststoff-Lippe zu versehen und zwischen dem Unterlagsboden und dem Endbelag anzuordnen. Damit ergibt sich zwar ein kontinuierlicher Anstieg des Endbelags vom Bodenniveau zum Rahmen hin. Der sich ergebende Höhenunterschied zwischen einer Oberkante des Einbaurahmens und der Bodenfläche liegt aber aufgrund der für die Tragkraft erforderlichen Stärke des Flansches im gleichen Bereich, wie den bekannten Fassungen, bei welchen ein Tragflansch den Endbelag übergreift. Die genannten Nachteile wie Stolperfalle oder Gehbehinderung bleiben also bestehen.

Die EP 1 035 270 A2 (Wulf et al.) beschreibt eine Fassung bzw. einen Einbaurahmen mit Deckel für eine spezielle Anwendung bei Fliesen-Belägen. Der Einbaurahmen weist einen aussen umlaufenden Flansch auf, welcher in eingebautem Zustand in einem Verlegemörtel der Fliesen untergebracht ist. Der Flansch hält dabei den Einbaurahmen, indem er mit einer wand- oder bodenseitigen Oberfläche mit der Wand- bzw. der Bodenfläche verklebt ist. Da die Verlegemörtelschicht ein vergleichsweise tiefes Bett für die Fliesen bildet, kann der tragende Flansch trotz beträchtlicher Dicke vollständig in der Mörtelschicht untergebracht werden, sodass angrenzende Fliesen über den Flansch bis an eine Stossleiste des Einbaurahmens herangeführt werden können. Diese Ausführung ist aber nur bei besonders dicken Klebeschichten wie im Falle der Fliesen anwendbar. Bei herkömmlichen Klebeschichten für Bodenbeläge würde sich, wie bei der oben genannten Lösung der WO 00/60191 A1, ein Anstieg des Endbelags zum Einbaurahmen hin ergeben.

Die DE 7221437 U offenbart eine Anordnung gemäss dem Oberbegriff des Anspruchs 1.

### Darstellung der Erfindung

Aufgabe der Erfindung ist es daher, eine dem eingangs genannten technischen Gebiet zugehörende Fassung mit Deckel zu schaffen, welche vielseitig anwendbar und einfach in der Anwendung ist.

Die Lösung der Aufgabe ist durch eine Anordnung gemäss Anspruch 1, eine Fassung gemäss Anspruch 16, einen Einbausatz gemäss Anspruch 17, und ein Verfahren gemäss Anspruch 14 definiert. Gemäss der Erfindung ist die Fassung mit Deckel zur Montage in einer Bodenöffnung geeignet. Dabei kann die Fassung zur Halterung eines Einsatzes wie z.B. einer Verteilerdose, aber auch von sanitären Armaturen, ausgebildet sein. Die Fassung weist einen Durchtritt auf, welcher bei montierter Fassung einen mit dem Deckel verschliessbaren Zugang zu der Bodenöffnung bildet. Bei verschlossenem Durchtritt ist eine Oberseite des Deckels weitgehend koplanar zu einer die Bodenöffnung aufweisenden Bodenfläche angeordnet. Die Fassung weist eine bezüglich des Durchtritts aussen liegende Mantelfläche auf, auf welcher eine Nut ausgebildet ist, die für die Aufnahme eines Klebstoffs zur Verklebung der Fassung an ihrer Mantelfläche mit einer Innenwandung der Bodenöffnung vorgesehen ist.

Da es sich bei der Erfindung vornehmlich um eine Fassung mit Deckel zum Einbau in einer Bodenöffnung handelt, werden die Begriffe "oben" und "unten" bezüglich einer mit der Fassung versehenen Bodenöffnung in einem Boden definiert. Die vorliegende Fassung ist grundsätzlich auch zum Einbau in einer Wand oder einer Decke geeignet. In diesem Fall sind die Begriffe "oben" und "unten" allgemein zu "wandabgewandt" bzw. "wandseitig" anzupassen, respektive im Fall eines Deckeneinbaus zu "unten" und "oben" zu verkehren. Hierbei ist festzuhalten, dass zwar eine Fassung zur Anwendung bei Böden im Allgemeinen auch zum Wandeinbau geeignet ist, der Umkehrschluss jedoch nicht zwingend zulässig ist: Die Anforderungen an eine Bodendose z. B. hinsichtlich Tragkraft und Abstimmung auf Endbeläge sind im Allgemeinen von Unterputzfassungen zum Wandeinbau nicht ohne weiteres gewährleistet. Bei Fassungen zum reinen Wandeinbau bestehen jedoch typischerweise keine nennenswerten Anforderungen an eine minimale Traglast und derartige Fassungen brauchen auch nur in seltenen Fällen auf Wandbeläge unterschiedlicher Dicken abgestimmt sein. Im Weiteren bezeichnet hier und im Folgenden der Begriff koplanar, dass zwei koplanare Ebenen zusammenfallen, d.h. parallel sind und alle Punkte der Ebenen gemeinsam haben. Sind zwei Flächen als koplanar bezeichnet, so ist damit gemeint, dass die Ebenen, welche die Flächen umfassen zueinander koplanar sind.

Die erfindungsgemässe Fassung kann als Einbaurahmen ausgebildet sein, welcher in eingebautem Zustand eine Bodenöffnung umrahmt, das heisst ringförmig vollständig umschliesst. Dabei kann die Fassung grundsätzlich vieleckig, insbesondere viereckig, oder aber auch rund oder oval sein, sodass sie bei entsprechenden Bodenöffnungen zum Einsatz kommen kann. Der Deckel der Fassung ist dann jeweils entsprechend ausgebildet, wobei auch Spezialfälle denkbar sind, bei welchen eine vieleckige Fassung einen Durchtritt aufweist, welcher mit einem runden Deckel verschliessbar ist.

Bevorzugt ist die Fassung aus Aluminiumprofilen hergestellt, welche beispielsweise mit einem Warmextrusionsverfahren hergestellt werden, d.h. gepresst sind. Eine mögliche viereckige Fassung ist dann z.B. aus vier entsprechenden Aluminiumprofilen gefertigt, welche an den Ecken miteinander verschweisst sind, bevorzugt auf Stoss mit Gehrung. Es ist unmittelbar klar, dass auch andere polygonale Fassungen auf gleichartige Weise hergestellt werden können, wobei dann eine entsprechende Anzahl von geradlinigen Profilen vorhanden sind. Zudem sind auch andere Materialien für eine erfindungsgemässe Fassung denkbar z.B. aus Edelstahl, Verbundswerkstoffen oder Kunststoffen, wobei die Materialwahl unter anderem durch die Erfordernisse der spezifischen Anwendung vorgegeben ist (mechanische Festigkeit, Art des Einbaus, Art des Bodens etc). Die erfindungsgemässe Idee ist dabei nicht durch eine Wahl des Materials für die Fassung eingeschränkt.

Erfindungsgemäss weist die Fassung eine aussen liegende Mantelfläche auf, welche weitgehend komplementär zu einem Bereich der Innenwandung an der Öffnung einer für die Montage der Fassung vorgesehenen Bodenöffnung ausgebildet ist. Mantelfläche versteht sich hierbei als eine bezüglich des Durchtritts aussenseitig an der Fassung angeordnete Oberfläche. Die Fassung kann somit von oben her in die Bodenöffnung eingesetzt werden, dass die Mantelfläche (mit einer Einbautoleranz) weitgehend parallel zum entsprechenden Bereich der Innenwandung angeordnet ist. Insbesondere sind dabei, abgesehen von einer allfälligen Reinigung zur besseren Haftung des Klebestoffs an der Innenwandung, im Gegensatz zu bekannten Fassungen keine speziellen Massnahmen wie z.B. Anbringung von Befestigungsmitteln an der Bodenöffnung zu treffen.

Erfindungsgemäss weist die Mantelfläche mit Bezug auf die Montagerichtung einen Hinterschnitt in der Form einer Klebenut auf, welche in montiertem Zustand weitgehend parallel zu der Bodenfläche ausgebildet ist. Aufgrund der Klebenut kann die Fassung auf einfache Art durch eine Verklebung innerhalb der Bodenöffnung befestigt werden. Indem der durch die Klebenut gebildete Hinterschnitt den Klebstoff umgreift, ist die Fassung bei abgebundenem Klebstoff sicher im Klebstoff verankert. Dabei ist auch ein sicherer Halt der Fassung gewährleistet, wenn der Klebstoff zwar an der Innenwandung der Bodenöffnung, aber z.B. aus Gründen mangelnder Reinigung durch den Monteur nicht an der Mantelfläche oder in der Klebenut der Fassung haftet. Indem die Klebenut den Klebstoff umgreift, ist die Fassung auch in diesem Fall über einen Formschluss mit dem Klebstoff in der Bodenöffnung verankert.

Die vorliegende Fassung ist unabhängig von der Art des Bodenaufbaus anwendbar. Es kann dieselbe Ausführungsform für alle bekannten Bodensysteme, insbesondere die drei oben genannten Unterlagsböden, Hohlraumboden und Doppelboden, eingesetzt werden. Insbesondere stellen Trennlagen wie Dampfsperren, Primärisolationen zum Schallschutz und/oder thermische Isolationen keine Probleme dar, da die Montage der erfindungsgemässen Fassung in der Bodenöffnung von oben her und eine Befestigung über die Verklebung an der Innenwand der Bodenöffnung erfolgt. Eine Abstützung auf dem tragenden Rohboden ist ebenso wenig erforderlich wie ein Eingiessen der Fassung in z.B. einen Unterlagsboden. Die Montage ist somit komplett unabhängig von der Struktur des Unterbodens und tangiert auch nicht die oben genannten Trennlagen. Da die Verankerung der Fassung in einer oberen Schicht des Bodens erfolgt, welche gegenüber dem tragenden Rohboden isoliert ist, bestehen auch keine Probleme hinsichtlich einer thermischen und/oder akustischen Isolation wie sie sich bei einer Abstützung bei bekannten Fassungen ergibt.

Die Nut kann abschnittweise ausgebildet sein oder aber auch durchgehend die Fassung umlaufen. Es ist auch denkbar mehrere Nutenabschnitte oder durchgehende Nuten parallel zueinander auf der Mantelfläche auszubilden, wobei jede zweckdienliche Ausführung denkbar ist, welche einen Hinterschnitt bildet, der die Fassung in der Bodenöffnung durch eine Verklebung mit der Innenwand auf die genannte Art zu verankern mag.

In einer möglichen Ausführungsform hat die Nut einen U-förmigen Querschnitt. Eine Klebstoffverbindung zwischen der Innenwand der Bodenöffnung und der Mantelfläche kann somit Bereiche mit verschiedenen Dicken aufweisen: Eine erste Dicke gemäss dem Abstand Mantelfläche/Innenwand und eine zweite Dicke gemäss dem Abstand Nutenboden/Innenwand. Das ist insofern vorteilhaft, als dass typische für die vorliegende Anwendung geeignete Klebstoffe eine maximale Schichtdicke aufweisen, bis zu welcher ein optimaler Halt gewährleistet ist. Insbesondere sind beispielsweise bei den verwendeten Klebstoffen maximale Schichtdicken von bis zu 8 mm üblich. Aufgrund der mit der Klebenut erreichten unterschiedlichen Klebstoffdicken ist jedoch auch eine guter Halt gewährleistet, wenn eine Klebstoffdicke vom Nutboden zur Innenwand 8 mm übersteigen sollte. In diesem Fall übernimmt eine Klebstoffschicht zwischen Mantelfläche und Innenwand die tragende Funktion, da diese eine um die Nut-Tiefe geringere Dicke aufweist. Die Klebeschicht zwischen der Mantelfläche und der Innenwand kann aber auch verschwinden, d.h. annähernd 0 mm Dicke haben, sodass der Klebstoff nur in der Klebenut vorhanden ist und die Fassung mit der Innenwand der Bodenöffnung verklebt. In allen Fällen verankert die Klebenut, unabhängig davon, ob der Klebstoff in der Nut eine tragende Funktion übernimmt oder nicht, aufgrund der Einbettung des durch die Nut gebildeten Hinterschnitts die Fassung in der Klebung und damit in der Bodenöffnung.

Ein weiterer Vorteil der aufgrund der Verklebung zwischen der Mantelfläche mit Klebenut und der Innenwand der Bodenöffnung erfolgenden Montage der Fassung liegt in der damit erreichten, im Vergleich mit bekannten Systemen, grossen Toleranz bei der Ausbildung der Bodenöffnung. Aufgrund der mit der Klebenut erreichten grossen Spannbreite von wirkungsvollen Klebeschichtdicken kann die Bodenöffnung vergleichsweise ungenau ausgebildet sein. Bei einer angenommen Tiefe der Nut von 3 mm und einer maximalen Schichtdicke des Klebstoffs von 8 mm kann im Maximalfall eine Dimension der Bodenöffnung bis zu 16 mm grösser sein, als durch die Mantelfläche der Fassung vorgegeben, und dennoch eine sichere Montage der Fassung erlauben. Damit vereinfachen sich die erforderlichen Massnahmen zum Einbau der erfindungsgemässen Fassungen gegenüber dem Stand der Technik beträchtlich. Beispielsweise können die tragenden Flansche der eingangs beschriebenen bekannten Einbaurahmen bei derartigen Toleranzen eine tragende Funktion für die geforderten Traglasten kaum erfüllen, da aufgrund der Distanz der Auflage des Flansches auf der Bodenfläche vom belasteten Einbaurahmen eine grosse Hebelwirkung entsteht.

Grundsätzlich sind auch andere, weitgehend beliebige zweckmässige Nuten-Querschnitte denkbar wie z.B. ein Dreiecksquerschnitt oder kreisbogenförmige Nuten-Profile. Damit werden aufgrund der kontinuierlich sich ändernden Tiefe der Klebenut eine Vielzahl von unterschiedlichen Dicken der Klebeschicht erreicht. Die Nut kann aber ebenso z.B. abgestuft sein, sodass sich auf diese Art verschiedene Tiefen der Nut ergeben. Die Masse der Klebenut wie Tiefe, Breite und bei abschnittsweiser Ausbildung auch die Länge der Nutenabschnitte, sind auf den zur Montage verwendeten Klebstoff abzustimmen. Es hat sich beispielsweise gezeigt, dass für die verwendeten Klebstoffe mit U-förmigen Nuten mit einer Tiefe senkrecht zur Mantelfläche von etwa 2-5 mm und mit einer Breite senkrecht zur Längsrichtung der Nut von etwa 10-13 mm gute Ergebnis erzielt werden können.

Mit anderen Worten ermöglicht die Klebenut der erfindungsgemässen Fassung aufgrund des damit erzeugten Hinterschnitts der Mantelfläche eine vielseitige und dabei einfache, rasche und sichere Montage der Fassung. Zudem zeigen die erfindungsgemäss verklebten Fassungen in Modellversuchen ein gutes Langzeitverhalten.

Besonders bevorzugt ist eine Ausführungsform der Fassung, welche den Durchtritt, welcher mit dem Deckel verschlossen werden kann, vollständig umschliesst. Die Fassung ist in diesem Fall rahmenartig ausgebildet und umrahmt die Bodenöffnung an der Bodenoberfläche vollständig. Die Fassung entspricht also einem ringförmigen Einbaurahmen, welcher einen Durchtritt aufweist, der bei montierter Fassung einen Zugang zu der Bodenöffnung ergibt und mit dem Deckel verschlossen werden kann.

Mit Vorteil umläuft die Nut auf der aussen liegenden Mantelfläche den Durchtritt vollständig, d.h. die Nut geht z.B. nach einem Umlauf um den Durchtritt in sich selbst über. Die Nut kann sich aber auch gewindeartig um den Durchtritt schrauben, was z.B. das Einbringen der Fassung in die Bodenöffnung durch Eindrehen in den Klebstoff ermöglicht. Wie oben bereits erwähnt, können auch mehrere Nuten vorhanden sein, oder eine Mehrzahl vergleichsweise kurzer Nutenabschnitte ausgebildet sein. Aus Gründen einer vereinfachten Herstellung sowie gleichmässigen Verankerung der Fassung sind grundsätzlich jedoch Nuten bevorzugt, welche den Durchtritt, zumindest einmal, vollständig umlaufen. Womit aber nicht ausgeschlossen sein soll, dass für verschiedene Anwendungen auch Lösungen mit einer Vielzahl von Nutenabschnitten eine bevorzugte Ausführungsform der Fassung darstellen kann.

Ausführungsformen der Fassung, welche den Durchtritt nicht vollständig umfassen, sind grundsätzlich zwar ebenso denkbar, weisen aber hinsichtlich Einfachheit der Montage und Stabilität Nachteile gegenüber vollständig umschliessenden Ausführungsformen auf.

In einer bevorzugten Ausführungsform ist im Durchtritt der Fassung eine Auflage derart ausgebildet, dass die Auflage in montiertem Zustand der Fassung bei verschlossenem Durchtritt den Deckel unterstützt. Insbesondere umfasst die Auflage dabei einen im Durchtritt der Fassung an einer Innenwand der Fassung ausgebildeten Vorsprung, welcher vorzugsweise als an der Innenwand umlaufender Flansch ausgebildet ist bzw. einen derartigen Flansch umfasst. Besonderes bevorzugt ist die Auflage der Fassung für den Deckel derart ausgebildet, dass sie auch zur Halterung bzw. Unterstützung des Einsatzes geeignet ist.

Die Auflage braucht hierbei den Deckel nicht direkt zu unterstützen, sondern es können beispielsweise Halterungselemente eines Einsatzes wie z.B. ein Tragflansch zwischen der Auflage und dem Deckel derart angeordnet sein, dass die Halterungselemente bei geschlossenem Deckel zwischen Auflage und Deckel eingeklemmt sind. Damit ergibt sich eine besonders einfache Art des Einbaus einer erfindungsgemässen Fassung mit Einsatz: Nachdem die Fassung in die Bodenöffnung montiert wurde, kann die Verkabelung vorgenommen werden. Der Einsatz kann dann in die Fassung ebenfalls von oben her eingesetzt werden, wobei die Halterungselemente von der Auflage unterstützt werden, d.h. der Einsatz z.B. in die Fassung gehängt wird. Die Kabel und Kabelkanäle sind dann beispielsweise vom Einsatz verdeckt. Schliesslich kann der Deckel auf den Halteelementen des Einsatzes aufgelegt werden. Sowohl der Einsatz als auch der Deckel sind in diesem Fall von derselben Auflage unterstützt.

Zusätzlich können jeweils zwischen Auflage, Halteelemente des Einsatzes und Deckel Dämpfungselemente und/oder Abstandshalter angeordnet sein. Mit Abstandshaltern können beispielsweise Feinjustierungen des Deckelniveaus vorgenommen werden, um die Deckeloberfläche mit der umgebenden Bodenfläche auf ein Niveau zu bringen oder waagerecht auszunivellieren, sofern dies erforderlich sein sollte.

In einer Variante kann der Einsatz auch auf andere Art in der Fassung befestigt werden, z.B. durch eine weitere Auflage, welche nur den Einsatz unterstützt, während der Deckel eine eigene Auflage hat. Während diese Ausführungsform für bestimmte Anwendungen ebenfalls eine bevorzugte Ausführungsform darstellen kann, ist im Allgemeinen aus Gründen der Wirtschaftlichkeit eine Ausbildung von nur einer Auflage zu bevorzugen. Grundsätzlich ist es zudem auch denkbar, den Deckel über ein Scharnier und ein Schloss an der Fassung zu lagern, wobei derartige Ausführungsformen aber aufwändiger in der Herstellung sind.

Aufgrund der horizontalen Verklebung sind bei der Montage der erfindungsgemässen Fassung Massnahmen erforderlich, welche während des Abbindens des Klebstoffs die Fassung auf einer gewünschten Höhe in der Bodenöffnung halten. Da die erfindungsgemässe Fassung von oben her in die Bodenöffnung eingesetzt wird und durch ihr Eigengewicht in die Öffnung fallen würde, ist zu verhindern, dass die Fassung in die Bodenöffnung fällt. Dies kann z.B. durch Einbauhilfen wie z.B. temporäre Unterstützungen erreicht werden, welche nach dem Abbinden wieder entfernt werden. Derartige Lösungen verlangen aber eine manuelle Ausrichtung der Fassung und machen die Montage aufwändig.

Erfindungsgemäss ist daher bei der erfindungsgemässen Fassung eine Montagehaltevorrichtung vorgesehen, welche die Fassung während der Montage in der Bodenöffnung hält. Die Montagehaltevorrichtung ist unlösbar an die Fassung angeformt, insbesondere derart, dass die Montagehaltevorrichtung bei in der Bodenöffnung montierter Fassung oberhalb der Klebenut angeordnet ist.

Die Montagehaltevorrichtung wirkt dabei zum einen im Sinne einer Einbaulehre, welche die gewünschte Einbautiefe und -position der Fassung festlegt. Mit anderen Worten ermöglicht die Montagehaltevorrichtung somit eine Selbstjustierung der Fassung hinsichtlich einer Nivellierung der Fassung bezüglich einer umgebenden Bodenfläche. Somit wird sichergestellt, dass die Fassung nach der Montage eine wohldefinierte Lage und Höhe (Niveau) gegenüber der unmittelbar die Bodenöffnung umgebenden Bodenoberfläche hat. Zum anderen kann die Montagevorrichtung bei entsprechender Ausbildung eine temporäre Haltefunktion übernehmen, welche eine bedingte Belastbarkeit des Deckels bzw. der den Deckel haltenden Fassung gewährleistet, während der Klebstoff noch nicht ausgehärtet ist bzw. abgebunden hat. In diesem Fall kann unmittelbar nach Montage der Fassung mit den Bauarbeiten weitergefahren werden, wobei die frisch eingebauten Fassungen nicht umgangen werden müssen. Sobald der Klebstoff abgebunden hat, trägt der Klebstoff die Fassung und die angeformte Montagehaltevorrichtung, verbleibt in der Montageposition an der Fassung.

Bevorzugt umfasst die Montagehaltevorrichtung einen auf der aussen liegenden Mantelfläche ausgebildeten Anschlag, welcher derart über die Mantelfläche übersteht, dass bei der Montage der Fassung eine Unterseite des Anschlags an die Bodenfläche anstösst.

Der Anschlag der Montagehaltevorrichtung verhindert so das Absinken der Fassung in die Bodenöffnung. Die Montagehaltevorrichtung verbleibt auch nach der Montage an der Fassung, sodass auch die Unterseite des Anschlags in Kontakt mit der Bodenfläche verbleibt.

Vorzugsweise ist dabei der Anschlag derart an der Fassung ausgebildet, dass durch das Anstossen auch im Sinne einer Lehre die endgültig gewünschte Position der Fassung eingehalten wird (Selbstjustierung). Bevorzugt ist dabei die Oberfläche des Deckels auf einem Niveau mit der Bodenfläche angeordnet, sodass nach einer Belegung mit einem Endbelag des Deckels und der Bodenfläche auch das Endniveau des Bodens mit dem Niveau des belegten Deckels zusammenfällt. Hierzu sind die Auflage für den Deckel und der Anschlag derart an der Fassung angeordnet, dass eine Oberseite des Deckels bei verschlossenem Durchtritt bezüglich einer Richtung senkrecht zur Oberseite des Deckels im Wesentlichen auf demselben Niveau angeordnet werden kann, wie die Unterseite des Anschlags und dabei insbesondere die Oberseite des Deckels bei montierter Fassung und bei verschlossenem Durchtritt im Wesentlichen auf demselben Niveau liegt wie die Bodenfläche.

Hierbei ist festzuhalten, dass ein Abstand senkrecht zur Oberfläche des geschlossenen Deckels zwischen der Unterseite des Anschlags und der Auflage nicht zwingend der Dicke des Deckels entsprechen muss. Wie oben beschrieben können auch noch Halteelemente des Einsatzes und/oder Dämpfungs- sowie Abstandselemente zwischen der Auflage und dem Deckel angeordnet sein, welche beispielsweise eine Feineinstellung des Niveaus der Deckeloberfläche ermöglichen.

Bei einer besonders bevorzugten Ausführungsform umfasst der Anschlag der Montagehaltevorrichtung einen aussenseitig an der Mantelfläche umlaufenden Flansch, wobei die besagte Unterseite des Anschlags eine Unterseite des Flansches umfasst, sodass bei montierter Fassung die Unterseite des Flansches weitgehend auf der Bodenfläche aufliegt. Es ist aber auch denkbar, einzelne diskrete Vorsprünge auf der Mantelfläche vorzusehen, d.h. im weiteren Sinne einen unterbrochenen Flansch vorzusehen, wobei in diesem Fall die Fassung von den Vorsprüngen bzw. Flanschabschnitten in der gewünschten Position gehalten ist.

Mit Vorteil verringert sich eine Dicke des Flansches mit zunehmendem Abstand von der Mantelfläche der Fassung. Mit Dicke ist hier eine Dimension bezeichnet, welch quer zur Längsrichtung des umlaufenden Flansches definiert ist, also in montiertem Zustand der Fassung senkrecht zur Bodenfläche. Der Flansch verjüngt sich also bevorzugt derart mit zunehmenden Abstand von der Mantelfläche der Fassung, dass sich ein weitgehend glatter Übergang von der Flanschoberfläche zur Bodenfläche ergibt. Die Verjüngung erfolgt dabei bevorzugt "von oben her", d.h. die Unterseite des Flansches ist flach und senkrecht zur Mantelfläche ausgebildet, in montiertem Zustand also parallel zur Bodenfläche, sodass die Unterseite auf der Bodenfläche weitgehend flach aufliegen kann. Eine Oberseite des Flansches ist dann beispielsweise gegenüber der Mantelfläche geneigt, sodass Ober- und Unterseite des Flansches nicht parallel ausgerichtet sind. Der Flansch weist in diesem Fall seine maximale Dicke an der Wurzel auf, an welcher er in die Mantelfläche übergeht.

Eine maximale Dicke des Flansches liegt bevorzugt im Bereich einer typischen Dicke einer Klebeschicht für einen Endbelag des Bodens oder eines Glattstrichs eines Unterlagsbodens, erfindungsgemäss übersteigt eine maximale Dicke des Flansches 1 mm nicht und liegt vorzugsweise im Bereich von 0.5 bis 1 mm. Dicke bezeichnet hierbei eine Dimension des Flansches, welche bei montierter Fassung senkrecht zur Bodenoberfläche steht.

Bei der angegebenen Dicke kann der Flansch innerhalb einer Klebeschicht des Endbelags angeordnet sein. Damit ist insbesondere der Vorteil verbunden, dass ein angeformter Flansch, welcher auch nach der Montage an der Fassung verbleibt, innerhalb der Klebeschicht untergebracht werden kann, wobei er keinen Anstieg des Endbelags zur Fassung hin bedingt. Der Flansch wird vom an die Fassung heranreichenden Endbelag überdeckt und ist in diesem Fall zwischen dem Unterlagsboden und dem Endbelag angeordnet, wobei der Endbelag im unmittelbar an die Fassung angrenzenden Bereich dasselbe Niveau aufweist, wie in Bereichen ausserhalb der Fassung. Somit besteht keine Gefahr von Stolperfallen oder anderen Gehbehinderungen. Ausserdem erfolgt auch keine besondere Beanspruchung von überhöhten Bereichen des Endbelags oder der Fassung.

Dass der Flansch der Montagehaltevorrichtung derart dünn ausgebildet werden kann, dass er in einer Klebeschicht oder einem Glattstrich untergebracht werden kann, ist eine direkte Folge der an der Fassung ausgebildeten Klebenut und der damit möglichen Montage durch eine horizontale Verklebung zwischen Mantelfläche der Fassung und Innenwand der Bodenöffnung. Da der Flansch keine endgültige tragende Funktion zu erfüllen hat und auch nicht zur Verklebung mit der Bodenoberfläche dient, kann er mit der angegebenen geringen Dicke ausgebildet sein. Ein tragender Flansch könnte mit den Anforderungen der Unterbringbarkeit in der Klebeschicht die Anforderungen an eine Traglast nicht erfüllen. Für die temporäre Haltefunktion bei der Montage sowie der Funktion als Einbaulehre ist die dünne und damit recht schwache Ausbildung des Flansches jedoch hinreichend. Insbesondere kann der Flansch auch nach Abbinden des Klebstoffs bei endgültig montierter Fassung in seiner Position belassen werden, ohne die Endfertigung des Bodens durch Aufbringen oder Anordnen des Endbelags zu beinträchtigen.

Der Deckel der erfindungsgemässen Fassung ist zur Belegung mit vorzugsweise demselben Endbelag vorgesehen, wie der umgebende Boden. Um einen definierten Abschluss des Bodenendbelags zum Deckel hin zuschaffen, können so genannte Stossleisten oder Stosskanten an der Fassung vorgesehen sein. Diese stehen bevorzugt mit der Dicke des Endbelags über die Fassung senkrecht zur Bodenfläche, d.h. in vertikaler Richtung, über, sodass sie auf demselben Niveau wie der Endbelag enden. Der Endbelag wir dann von der Bodenfläche her zur Fassung hin bis an die Stosskanten heranreichend verlegt, sodass die vom Deckel verschlossene Öffnung im Endbelag durch die Stossleisten begrenzt ist.

In einer bevorzugten Ausführungsform ist an der Fassung an einer Oberseite der Fassung eine senkrecht zur Bodenfläche angeordnete Nut ausgebildet, welche für die Aufnahme von steckbaren Stossleisten für einen Endbelag des Bodens vorgesehen ist. Die Stossleisten können dabei längliche bzw. streifenförmige Stossleistenelement umfassen, welche von oben her in die dafür vorgesehenen Nuten eingesteckt werden. Eine Breite quer zur Längsrichtung der Stossleistenelemente wird dann bevorzugt so gewählt, dass eine Oberkante der Stossleisten auf dem Endniveau des Endbelags des Bodens angeordnet ist. Die Breite der Stossleistenelemente im Zusammenhang mit einer Tiefe der Nuten bestimmt somit den Überstand der Stossleisten über die Fassung. Bei einer viereckigen Fassung werden beispielsweise vier entsprechende Stossleistenelemente in die Fassung eingesetzt, welche an den Ecken aneinanderstossen. Die Stossleistenelemente können dabei einfache streifenförmige Bänder sein, beispielsweise aus ästhetisch ansprechenden Metall. Es sind aber auch Profilleisten mit mehreren Schenkeln z.B. unterschiedlicher Länge denkbar, welche auf verschiedene Arten mit einem der Schenkel in die Nuten eingesteckt werden können, um beispielsweise je nach überstehendem Schenkel unterschiedliche Überstände zu erreichen.

Es hat sich herausgestellt, dass es besonders vorteilhaft ist, wenn die einzelnen Stossleistenelemente zueinander komplementäre Eingriffsmittel an ihren Längsenden aufweisen. Die Eingriffsmittel benachbarter Stossleistenelemente sind in diesem Fall in eingesetztem Zustand miteinander im Eingriff, sodass die benachbarten Stossleistenelemente an ihren Enden miteinander verbunden sind. Einerseits wird dabei eine definierte Position der einzelnen Stossleistenelemente zueinander geschaffen, insbesondere hinsichtlich einer relativen Verschiebung in einer Richtung quer zur Längsrichtung, und andererseits wird die mechanische Stabilität der gesamten Stossleiste erhöht. Derartige Stossleistenelemente lösen somit die Aufgabe eine Stossleiste zu schaffen, welche vielseitig anwendbar ist und auf einfache Weise an die gegebenen Erfordernisse angepasst werden kann.

Besonders vorteilhaft haben sich dabei einfache Konstruktionen erwiesen, bei welchen das Stossleistenelement an gegenüberliegenden Längsenden einander komplementär entsprechende Federn und Nuten aufweist. Dabei kann das Stossleistenelement geradlinig oder, im Fall von runden Fassungen, auch kreisbogenförmig ausgebildet sein. In einem Spezialfall umfasst eine Stossleiste nur ein Stossleistenelement, welches derart gebogen ist, dass die komplementären Eingriffsmittel des einen Stossleistenelements miteinander zum Eingriff kommen.

In einer für gewisse Anwendungen zu bevorzugenden Ausführungsform der Fassung sind Stossleisten für einen Endbelag an einer Oberseite der Fassung senkrecht zur Bodenfläche angeformt. Die Stossleisten bilden in diesem Fall einen integralen Bestandteil der Fassung und sind unlösbar mit dieser verbunden. Dabei können die angeformten Stossleisten eine vorgegebene Höhe aufweisen, welche einer Dicke der gängigsten Standardbeläge entspricht. Beispielsweise ist eine Stosskante von 3 mm für eine Veilzahl von Standardanwendungen geeignet und stellt somit in diesen Fällen eine bevorzugte Ausführungsform dar. In einer weiteren Ausführungsform weist die angeformte Stossleiste einen Überstand von etwa 30 mm auf, welcher die Dicke einer Vielzahl von Bodenbelägen übersteigt. In diesem Fall wird vor der Montage der Fassung in der Bodenöffnung die Stossleiste auf die gewünschte, der Dicke des gewählten Endbelags entsprechende, Höhe abgeglichen. Damit wird eine einfach anpassbare und vielseitig anwendbare Fassung der erfindungsgemässen Art bereitgestellt.

Die erfinderische Idee erfasst dabei auch eine Bodendose, welche eine erfindungsgemässe Fassung mit Deckel sowie einen Einsatz umfasst, der derart ausgebildet ist, dass er in der Fassung gehaltert sein kann. Wie bereits oben ausgeführt kann es sich bei dem Einsatz um einen Einsatz für elektrische Armaturen z.B. eine Verteilerdose oder eine Schalttafel handeln. Der Einsatz kann aber auch eine Halterung für Armaturen aus dem sanitären Bereich oder dem Bereich der Gasleitungen o.ä. sein. Grundsätzlich kann die Bodendose mit der erfindungsgemässen Fassung vielseitig eingesetzt werden, insbesondere auch wie oben bereits beschrieben als Fassung mit Deckel ohne Einsatz.

Der Einsatz ist dabei vorzugsweise derart ausgebildet, dass er in der Fassung gehaltert sein kann, wenn der Deckel den Durchtritt der Fassung verschliesst. Der Einsatz ist in diesem Fall innerhalb der Bodenöffnung oder in einem Hohlraum des Bodens bzw. zwischen den Lagen eines Doppelboden angeordnet. Der Einsatz kann z.B. ausfahrbar sein, sodass bei geöffneten Deckel zum vereinfachten Zugang der Einsatz z.B. auf über Bodenniveau ausgefahren werden kann.

Aufgrund der Einfachheit und der damit verbundenen wirtschaftlichen und baulichen Vorteile ist ein Einsatz bevorzugt, welcher Auflageelemente aufweist, die bei montierter Fassung von einer Auflage der Fassung unterstützt werden. Mit Vorteil wird der Einsatz von derselben Auflage unterstützt, welche für den Deckel vorgesehen ist, wobei in diesem Fall die Auflageelemente, z.B. ein Tragflansch, beispielsweise zwischen Auflage und Deckel angeordnet ist. Mit Vorteil ist der Einsatz in diesem Fall z.B. wannenförmig ausgebildet und weist an einem oberen Rand einen aussen umlaufenden Tragflansch auf, welcher von der Auflage unterstützt ist. Der Deckel wird dann in einer besonders einfachen Ausführungsform einfach auf den Flansch des Einsatzes gelegt. Mit anderen Worten ist der Einsatz in diesem Fall von der Auflage unterstützt in die Fassung "gehängt". Es ist aber unmittelbar klar, dass die erfindungsgemässe Bodendose bzw. Fassung auch andere Einbaumöglichkeiten für den Einsatz zulässt wie beispielsweise Verschraubungen, Formschlusshalterungen oder Klemmungen. Insbesondere bei Anwendungen als Wanddose ist der Einsatz zusätzlich zu befestigen, damit er nicht aus der Fassung fallen kann.

Wie oben beschrieben kann aufgrund der erfindungsgemässen Ausführung der Fassung mit einer Klebenut die Toleranz bei der Ausbildung der Bodenöffnungen vergleichsweise gross sein, d.h. mit anderen Worten, dass die Bodenöffnung vergleichsweise ungenau ausgebildet sein kann und die Fassung dennoch ohne zusätzliche bauliche Massnahmen in der Bodenöffnung montierbar ist. Da erfindungsgemäss keine speziellen Merkmale an den Bodenöffnungen vorhanden sein müssen, ergeben sich besonders einfache und wirtschaftliche Möglichkeiten für die Ausbildung geeigneter Bodenöffnungen. Während in einem Doppelboden eine entsprechende Bodenöffnung einfach auszubilden ist, müssen bei einzubringenden bzw. zu giessenden Böden, wie beispielsweise Holraumböden oder Unterlagsböden, vorzugsweise bereits vor dem Einbringen entsprechende Massnahmen getroffen werden.

Auf besonders einfach Weise kann mit Hilfe einer Einbauhilfe in Form einer gegebenenfalls wieder verwendbaren Schalung vor und während dem Einbringen der Unterlagsböden eine Aussparung freigehalten werden, welche nach Abbinden des Unterlagsbodens und nach Entfernung der Schalung die gewünschte Bodenöffnung ergibt. Dabei kann ohne Nacharbeiten der Bodenöffnung die erfindungsgemässe Fassung in der Bodenöffnung montiert werden. Ein allfälliger Schwund des Unterlagsbodenmaterials kann aufgrund der grossen Einbautoleranz der Fassung kompensiert werden. Es versteht sich, dass die Schalungen vor dem Einbringen z.B. auf Unterflurkanäle aufgesetzt werden können, sodass nach dem Entfernen der Schalung die Unterflurkanäle durch die Bodenöffnung zugänglich sind.

Bevorzugt stellt die Erfindung daher einen Einbausatz bereit, welcher eine erfindungsgemässe Fassung umfasst sowie eine Einbauhilfe, welche zur Schaffung einer für die Fassung geeigneten Bodenöffnung beim Einbringen eines Unterflurbodens eine entsprechende Aussparung frei hält.

Die Montage der Fassung erfolgt dann indem entweder ein Klebstoff auf die Innenwand der Bodenöffnung aufgebracht wird, welcher beim Einsetzen der Fassung in die Bodenöffnung in die Klebenut einfliesst bzw. eingedrückt wird. Alternativ kann der Klebstoff auch vor dem Einsetzen in die Klebenut eingebracht werden. Die Erfindung stellt daher ein Verfahren zur Montage einer erfindungsgemässen Fassung bereit, bei welchem die Fassung unter Verwendung eines Klebstoffs derart in die Bodenöffnung eingesetzt wird, dass der Klebstoff in Kontakt mit der Mantelfläche der Fassung und der Innenwandung der Bodenöffnung ist, wobei der Klebstoff zumindest teilweise in die Klebenut eingebracht wird. Um die vorteilhafte Wirkung der erfindungsgemässen Klebenut zu erreichen, ist dabei bevorzugt die Fassung derart mit dem Klebstoff in Kontakt zu bringen, dass möglichst Teile der Mantelfläche und/oder Teile der Klebenut in Kontakt mit dem Klebstoff sind, wobei bevorzugt der von der Klebenut gebildete Hinterschnitt wenigstens teilweise vom Klebstoff umfasst bzw. im Klebstoff eingebettet ist.

Die Montagehaltevorrichtung der Fassung ermöglicht dabei eine besonders vorteilhafte Vereinfachung des Montageverfahrens, indem die Fassung aufgrund des Anschlags der Montagehaltevorrichtung einfach bis zum Anschlag in die Bodenöffnung gedrückt werden kann. Damit wird einerseits sichergestellt, dass die Fassung die korrekte Position hat (Selbstjustierung), d.h. der Deckel in geschlossenem Zustand das gewünschte Niveau der umgebenden Unterflurbodenoberfläche hat. Andererseits verhindert die Montagehaltevorrichtung, dass die Fassung bei der Montage weiter in die Bodenöffnung gedrückt werden kann bzw. durch ihr Eigengewicht weiter absinkt. Bevorzugt wird beim erfindungsgemässen Montageverfahren daher beim Einsetzen der Fassung in die Bodenöffnung die Unterseite des Anschlags mit der Bodenöffnung in Kontakt gebracht. Damit kann auch die Montagehaltevorrichtung auch ihre temporäre tragende Funktion erfüllen, indem allfällige Belastungen des Deckels bzw. der Fassung bei noch nicht abgebundenem Klebstoff auf den umgebenden Boden abgeleitet werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: Querschnitt durch ein Profile einer erfindungsgemässen Fassung mit angeformter Stossleiste;
- Fig. 2: Querschnitt durch eine in einer Bodenöffnung montierten erfindungsgemässen Fassung mit gesteckter Stossleiste;
- Fig. 3: perspektivische Ansicht einer Eckverbindung zweier Stossleisten;
- Fig. 4: Querschnitt einer erfindungsgemässen Fassung als Verteilerdose mit einem Einsatz in montierten Zustand;
- Fig. 5: Querschnitt einer erfindungsgemässen Fassung als Zugdose ohne Einsatz in montiertem Zustand;
- Fig. 6: Querschnitt einer Einbauhilfe nach dem Einbringen eines Unterbodens;
- Fig. 7: perspektivische Explosionsansicht einer erfindungsgemässen Fassung mit Deckel und einem Einsatz.

Grundsätzlich sind in den Figuren gleiche Teile mit gleichen Bezugszeichen versehen.

### Wege zur Ausführung der Erfindung

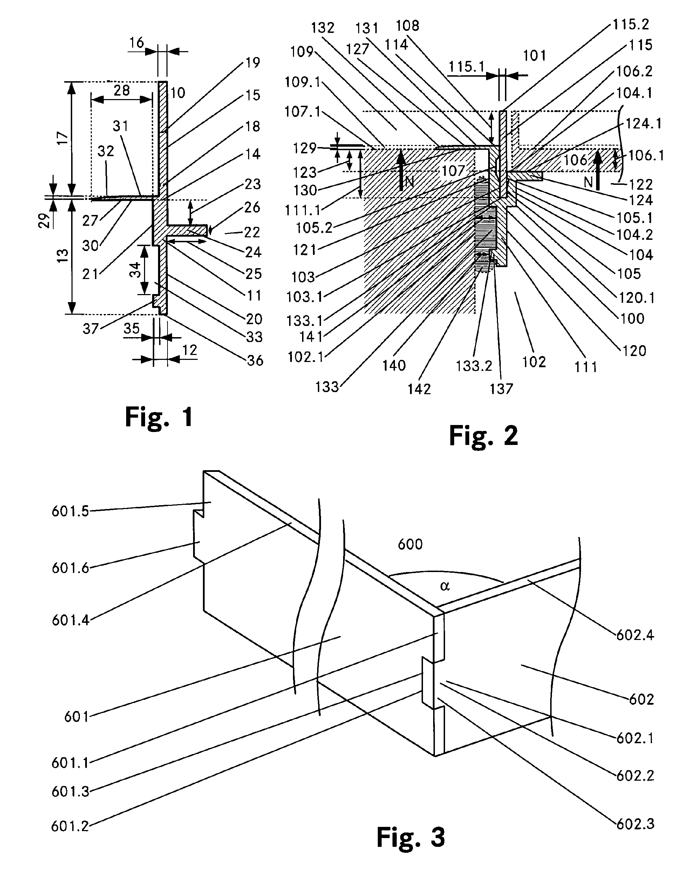

Figur 1 zeigt einen Querschnitt durch ein Profil 10 einer erfindungsgemässen Fassung. Die Fassung ist aus z.B. vier identischen Profilelementen aufgebaut, welche jeweils eine Kante eines quadratischen oder rechteckigen rahmenförmigen Einbaurahmens der Fassung bilden. Das dargestellte Profil 10 entspricht dabei dem Profilquerschnitt eines der Profilelemente in einer Richtung senkrecht zur Längsrichtung des Profilelements. Im Folgenden werden zur Vereinfachung die Begriffe "horizontal" und "vertikal" verwendet, welche in Bezug auf einen gemäss der Schwerkraft waagerechten Boden zu verstehen sind, welcher eine Bodenöffnung bzw. eine Montageöffnung aufweist, in welche die Fassung 1 montiert ist. Bei schrägen Böden bzw. bei Wänden oder Decken sind die Begriffe entsprechend durch "parallel zu der die Montageöffnung aufweisenden Oberfläche" (horizontal) und durch "senkrecht zu der die Montageöffnung aufweisenden Oberfläche" (vertikal) zu ersetzen. Analog ist mit Begriffen wie "oben" und "unten" zu verfahren. Der in der Fig. 1 dargestellte Querschnitt entspricht somit einer Schnittansicht in einer vertikalen Ebene.

Das Profil 10 weist eine Wandung 11 auf, welche in montiertem Zustand der Fassung vertikal angeordnet ist, sodass eine horizontale Breite 12 kleiner ist, als eine vertikale Höhe 13. Die Wandung 11 hat einen im Wesentlichen rechteckigen Querschnitt, wobei das Verhältnis von Höhe 13 zu Breite 12 etwa 8:1 beträgt.

An einer oberen Kante 14 der Wandung 11 ist in vertikaler Richtung eine Stossleiste 15 angeformt, welche in der dargestellten Ausführungsform eine horizontale Breite 16 von etwa 2/3 der Breite 12 der Wandung 11 aufweist und eine weitgehend der Höhe 13 entsprechende vertikale Höhe 17. Die Stossleiste 15 ist dabei derart vorgesehen, dass sie an eine Dicke, d.h. ein vertikale Dimension, eines späteren Endbelags (nicht dargestellt) eines die Fassung tragenden Bodens (nicht dargestellt) angepasst werden kann. Hierzu wird die Stossleiste 15 einfach auf der gewünschten Höhe, z.B. auf der Höhe 18 oder 19, abgeschnitten, sodass sie im montierten Endzustand der Fassung nicht über einen Endbelag des Bodens in vertikaler Richtung übersteht.

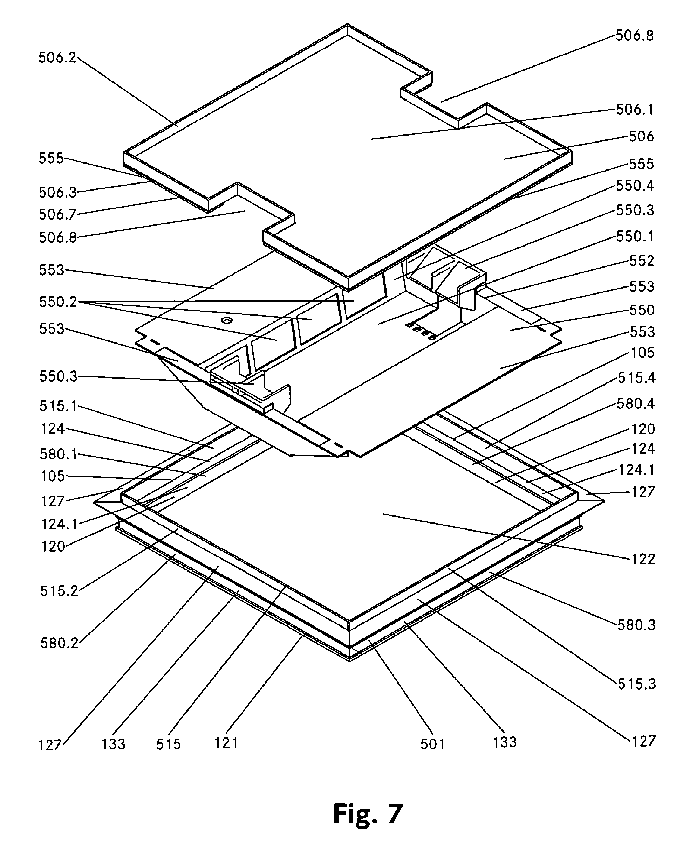

Die Wandung 11 der Fassung weist eine innere 20 und eine äussere Oberfläche 21 auf, wobei die innere Oberfläche 20 eine Innenwand der Fassung 1 bildend einen vertikalen Durchtritt 22 begrenzt, welcher von der Fassung rahmenartig umfasst ist (siehe auch Fig. 7). Die äussere Oberfläche 21 ergibt eine äussere Mantelfläche 21 der Fassung 1.

Auf der Innenwand ist von der oberen Kante 14 der Wandung 11 nach unten beabstandet ein horizontal, d.h. senkrecht zur Innenwand 20, in den vertikalen Durchtritt 22 auskragender Flansch 24 angeformt. Eine Dimension 25 senkrecht zur Innenwand 20 des Flansches 24, d.h. eine horizontale Dimension, entspricht weitgehend dem dreifachen der Breite 12 der Wandung 11 während eine Dicke 26 des Flansches 24, d.h. eine vertikale Dimension parallel zur Innenwand 20, im Wesentlichen der Breite 12 der Wandung 11 entspricht. Der Flansch 24 dient als Auflage zur Unterstützung für einen in Fig. 1 nicht dargestellten Deckel der Fassung, mit welchem der Durchtritt 22 verschlossen werden kann.

Auf der Höhe der oberen Kante 14 der Wandung 11 ist auf der Mantelfläche 21 an der oberen Kante 14 eine als dünner Flansch 27 ausgebildete Montagehaltevorrichtung angeformt. Der dünne Flansch 27 kragt senkrecht zur Mantelfläche 21 nach aussen aus, d.h. in eine vom Durchtritt 22 weg gerichteten Richtung von der Wandung 11. Der dünne Flansch 27 weist eine Dimension 28 senkrecht zur Mantelfläche 21 auf, d.h. in horizontaler Richtung, welche etwa 2/3 der Höhe 13 der Wandung 11 entspricht. Eine Dicke 29 des dünnen Flansches 27, d.h. eine vertikale Dimension, entspricht in der dargestellten Ausführungsform dabei etwa einem Drittel der Breite 12 der Wandung 11. Die gewählte Dicke 29 des dünnen Flansches 27 ist grundsätzlich jedoch unabhängig von der horizontalen Breite 12 der Wandung 11 und ist insbesondere derart gewählt, dass die Dicke 29 eine vertikale Dicke einer Klebeschicht zur Verklebung eines Endbelags eines Bodens oder eines Glattstrichs nicht übersteigt. Der dünne Flansch 27 ist also in seiner vertikalen Dimension derart bemessen, dass er in einer Übergangsschicht vom Unterlagsboden zu einem Endbelag (z.B. Klebeschicht, Glattstrich) untergebracht werden kann.

Während eine Unterseite 30 des dünnen Flansches 27 eben und senkrecht zur Mantelfläche 21 ausgebildet ist, ist eine Oberseite des dünnen Flansches 27 in einem wandungsnahen Bereich 31 ebenfalls eben und senkrecht zur Mantelfläche 21 ausgebildet, während die Oberseite in einem zweiten, wandungsfernen Bereich 32, gegenüber der Mantelfläche 21 derart geneigt ist, dass sich der dünne Flansch 27 im Bereich 32 mit zunehmendem Abstand von der Wandung 11 verjüngt, d.h. seine vertikale Dicke abnimmt.

Der dünne Flansch 27 und der Flansch 24 sind dabei derart an der Wandung 11 angeordnet, dass die Unterseite 30 des dünnen Flansches 27 in vertikale Richtung um die Distanz 23 gegenüber dem Flansch 24 versetzt ist. Ein in der Fig.1 nicht dargestellter Deckel zur Fassung weist dann eine vertikale Dicke auf, welche derart bemessen ist, dass bei von dem Flansch 24 unterstützten Deckel eine obere Oberfläche des Deckels auf derselben Höhe, d.h. demselben Niveau, liegt, wie die Unterseite 30 des dünnen Flansches 27. Sind keine Zwischenlagen zwischen Deckel und Flansch 24 vorgesehen, entspricht die Dicke des Deckels in diesem Fall der Distanz 23.

Auf der Mantelfläche 21 ist in einer unteren Hälfte ein als Nut 33 ausgebildeter Hinterschnitt vorhanden. Eine vertikale Dimension 34 der Nut 33 entspricht dabei etwa der Hälfte der Höhe 13 der Wandung 11. Eine Tiefe 35 der Nut 33 senkrecht zur Mantelfläche 21, d.h. eine vertikale Dimension, beträgt in etwa 50% der Breite 12 der Wandung 11. Die Nut 33 ist dabei derart von einer unteren Kante 36 der Wandung 11 beabstandet, dass sich im Bereich der unteren Kante 36 auf der Mantelfläche 21 ein Vorsprung 37 ergibt. In der dargestellten Ausführungsform ist der Vorsprung 37 zur unteren Kante 36 hin abgestuft ausgebildet. Die Nut 33 wirkt bei montierter Fassung als Klebenut, in welche ein Klebstoff einfliesst bzw. eingebracht werden kann, sodass nach Abbinden des Klebstoffs der Vorsprung 37 widerhaken-artig im Klebstoff eingebettet ist und die Fassung gegen ein Herausziehen aus der Montageöffnung nach oben und eine Belastung der Fassung 1 nach unten verankert und abstützt.

Figur 2 zeigt einen Querschnitt durch das Profil 100 einer in einer Bodenöffnung 102 eingebrachten erfindungsgemässen Fassung 101 mit gesteckter Stossleiste 115. Die Stossleiste 115 weist einen rechteckigen Querschnitt auf, wobei eine vertikale Höhe grösser ist als eine horizontale Breite 115.1.

Die Fassung 101 weist wie in Fig. 1 eine Wandung 111 mit einer Innenwand 120 und einer äusseren Mantelfläche 121 auf. Die Wandung 111 ist weitgehend analog zur Wandung 11 der Fig. 1 ausgebildet und umfasst rahmenartig einen Durchtritt 122 als Zugang zur Bodenöffnung 102. Im Gegensatz zur Wandung 11 der Fig. 1 ist jedoch in einer oberen Hälfte 111.1 eine nach oben sowie zum Durchtritt 122 hin offene Ausnehmung 103 ausgebildet. Die Ausnehmung 103 weist eine horizontale Dimension auf, welche weitgehend der Breite 115.1 der Stossleiste 115 entspricht, welche wiederum weitgehend der Breite 16 der Stossleiste 15 der Fig. 1 entspricht. Ein unterer Bereich der Stossleiste 115 kann somit von oben herein, vertikal ausgerichtet, in die Ausnehmung 103 eingebracht werden, sodass der untere Bereich der Stossleiste 115 vollständig in der Ausnehmung 103 aufgenommen ist. Eine obere Kante 115.2 der Stossleiste 115 steht dabei um eine Distanz 108 über eine obere Kante 114 der Wandung 111 über. Die Distanz 108 entspricht der vertikalen Dicke eines Endbelags 109 eines die Bodenöffnung 102 aufweisenden Bodens 107.

Zur Halterung der Stosskante 115 in der Ausnehmung 103 weist die Wandung 111 einen zusätzlichen Schenkel 104 auf, welcher sich ausgehend von einer Unterkante 103.1 der Ausnehmung 103 parallel zu einer Innenwand 120 der Wandung 111 im Durchtritt 122 derart vertikal nach oben erstreckt, dass die Ausnehmung 103 zum Durchtritt 122 hin vom Schenkel 104 begrenzt ist. Zwischen dem Schenkel 104 und der Wandung 111 ergibt sich somit aufgrund der Ausnehmung 103 eine Nut 105 der horizontalen Breite 115.1 der Stosskante 115, in welcher die Stossleiste 115 gehaltert ist. An einander zugewandten Oberflächen des Schenkels 104 und der Wandung 111 sind Haltemittel 105.1 und 105.2 ausgebildet, welche durch Kraftschluss die Stosskante 115 in der Nut 105 verankern.

Eine oberen Kante 104.1 des Schenkels 104 ist dabei von der oberen Kante 114 der Wandung 111 in vertikaler Richtung beabstandet. An der oberen Kante 104.1 ist ein Flansch 124 ausgebildet, welcher sich senkrecht von einer inneren, d.h. dem Durchtritt 122 zugewandten, Oberfläche 104.2 des Schenkels 104 in den Durchtritt 122 erstreckt. Der Flansch 124 ist dabei weitgehend analog dem Flansch 24 ausgebildet und bildet eine Unterstützung für einen Deckel 106. Schenkel 104 und Flansch 124 bilden somit ein L-Profil, welches am freien Ende des durch den Schenkel 104 gebildeten Arms im Bereich der Unterkante 103.1 der Ausnehmung 103 an der Innenwand 120 angeformt ist. Am Übergang auf eine innenseitige Oberfläche 104.1 des Schenkels 104 weist die Innenwand 120 somit einen stufenartigen Absatz 120.1 auf.

Analog zum dünnen Flansch 27 der Fig. 1 ist ein an der oberen Kante 114 der Wandung 111 ein aussenseitig von der Mantelfläche auskragender dünner Flansch 127 ausgebildet. Eine flache Unterseite 130 des dünnen Flansches 127 liegt dabei auf einer Oberfläche 107.1 des Bodens 107 auf. Der Flansch 127 weist dabei eine vertikale Dicke 129 auf, welche es erlaubt, den dünnen Flansch 127 vollständig in einer Klebeschicht 109.1 des Endbelags 109 des Bodens 107 anzuordnen. Der Flansch 127 verjüngt sich analog zum dünnen Flansch 27 der Fig. 1 in einem Oberflächenbereich 132, wodurch sich ein kontinuierlicher Übergang vom Flansch 127 zur Klebeschicht 109.1 ergibt. Eine Unterseite des Endbelags 109 liegt in dem wandungsnahen Bereich 131 weitgehend direkt auf dem Flansch 127 auf. Der Bereich 131 ist auf derselben Höhe angeordnet, wie die obere Kante 114 der Wandung 111, wodurch die um eine Distanz 108 über den dünnen Flansch 127 überstehende Stossleiste 115 mit ihrer oberen Kante 115.1 mit dem Endbelag 109 auf gleicher Höhe liegt.

Der Flansch 124 und der dünne Flansch 127 sind derart an dem Schenkel 104 bzw. an der Wandung 111 angeordnet, dass die Unterseite 130 zu einer Oberseite 124.1 des Flansches 124 eine vertikale Distanz 123 aufweist. Der Deckel 106 liegt in der Darstellung der Fig. 2 direkt auf der Oberfläche 124.1 des Flansches 124 auf und verschliesst somit den Durchtritt 122 zur Bodenöffnung 102. Eine Dicke 106.1 des Deckels 106 entspricht dabei der Distanz 123, sodass eine obere Oberfläche 106.2 des Deckels 106 auf demselben Niveau N, d.h. auf derselben vertikalen Höhe, liegt, wie die Unterseite 130 des dünnen Flansches 127 und damit auch auf demselben Niveau N liegt, wie die Bodenfläche 107.1.

Die Wandung 111 weist eine analog zur Nut 33 der Fig. 1 ausgebildete Nut 133 mit einem an einem unteren Ende 133.2 der Nut 133 angeordneten Vorsprung 137 (Fig. 1, Vorsprung 37) auf. Die Nut 133 ist derart auf der Mantelfläche 121 der Wandung 111 ausgebildet, dass das obere Ende 133.1 der Nut 133 auf gleicher vertikaler Höhe liegt, wie der stufenartige Absatz 120.1 auf der Innenwand 120.

Die Mantelfläche 121 der Wandung 111 weist dabei einen ersten Abstand 140 von einer Innenwand 102.1 der Bodenöffnung 102 auf. Ein Boden der Nut 133 weist einen zweiten Abstand 141 zur Innenwand 102.1 auf, welcher um eine Tiefe der Nut 133 grösser ist, als der Abstand 140. Ein Klebstoff 142, welcher zwischen der Mantelfläche 121 und der Innenwand 102.1 vorgesehen ist, füllt dabei wenigstens die Nut 133 weitgehend aus. Der Klebstoff 142 erstreckt sich aber auch in Bereiche, welche zwischen der Mantelfläche 121 und der Innenwand 102.1 angeordnet sind, wie z.B. auf einer aussenseitigen, d.h. vom Durchtritt 122 abgewandten Oberfläche des Vorsprungs 137. Der Klebstoff 142 verbindet somit Bereiche zwischen Innenwand 102.1 und Mantelfläche 121 mit unterschiedlichen horizontalen Abständen 140 und 141, d.h. der Klebstoff 142 weist unterschiedliche wirksame Schichtdicken auf. Damit ergibt sich ein breiter Spielraum und eine hohe Toleranz bei der Genauigkeit der Abstimmung der Bodenöffnung im Verhältnis zur Fassung (siehe oben).

Figur 3 zeigt eine perspektivische Ansicht einer Eckverbindung 600 zweier flacher länglicher Stossleistenelemente 601 und 602, welche im Querschnitt beispielsweise der Stossleiste 115 entsprechen. Die Stossleistenelemente 601 und 602 stossen an jeweils einem ihrer Längsenden 601.1 und 602.1 in einem rechten Winkel α aneinander, sodass die Längsenden 601.1 und 602.1 stirnseitig aneinanderstossen. Vier derartige Stossleistenelemente ergeben z.B. eine rechteckige bzw. bei gleicher Länge quadratische Stossleiste für eine erfindungsgemässe Fassung mit Nut zur Halterung von Stossleisten.

Die Eckverbindung 600 wird dabei über Eingriffsmittel 601.2 des Stossleistenelements 601 und Eingriffsmittel 602.2 des Stossleistenelements 602 erreicht. In der Ausführungsform der Darstellung der Fig. 3 sind die Eingriffsmittel 601.2 als eine Nut 601.3 und das Eingriffsmittel 602.2 als entsprechende Feder 602.3 ausgebildet. Die Feder 602.3 greift dabei in rechtem Winkel in die Nut 601.3 ein, wodurch die beiden Stossleistenelemente 601 und 602 gegen eine relative Verschiebung quer zur Längsrichtung der jeweiligen Stossleistenelemente 601 oder 602 gesichert sind. Feder 602.3 und Nut 601.3 können dabei derart ausgebildet sein, dass sich neben einem Formschluss durch die Feder/Nut-Verbindung auch ein Kraftschluss ergibt, welcher die Eingriffsmittel 601.2 und 602.2 der Stossleistenelemente 601 bzw. 602 aneinander hält, sodass auch bei Manipulation beim Einbau die Eckverbindung 600 weitgehend bestehen bleibt. Für die meisten Anwendungen ist aber ein loser Eingriff der Eingriffsmittel 601.2 und 602.2 hinreichend, da die Stossleistenelemente 601 und 602 beispielsweise in einer erfindungsgemässen Fassung, z.B. in der Nut 133 der Fassung 101, gehaltert sind.

Die so erreichte Eckverbindung 600 verhindert das Verschieben der Stossleistenelemente 601 und 602 gegeneinander und gewährleistet damit eine Fixierung der Stossleistenelemente 601 und 602 auf einem einheitlichen Niveau, d.h. Oberkanten 601.4 und 602.4 liegen in montiertem Zustand auf einer einheitlichen Höhe über einer Bodenoberfläche eines Bodens, in welchem die Fassung in einer Bodenöffnung montiert ist. Bevorzugt weist ein einzelnes Stossleistenelement 601 (bzw. analog Stossleistenelement 602) an gegenüberliegenden Längsenden 601.1 und 601.5 jeweils einander komplementär entsprechende Eingriffsmittel 601.2 und 601.6 auf, damit die einzelnen Stossleistenelemente 601 und 602 weitgehend frei kombinierbar sind.

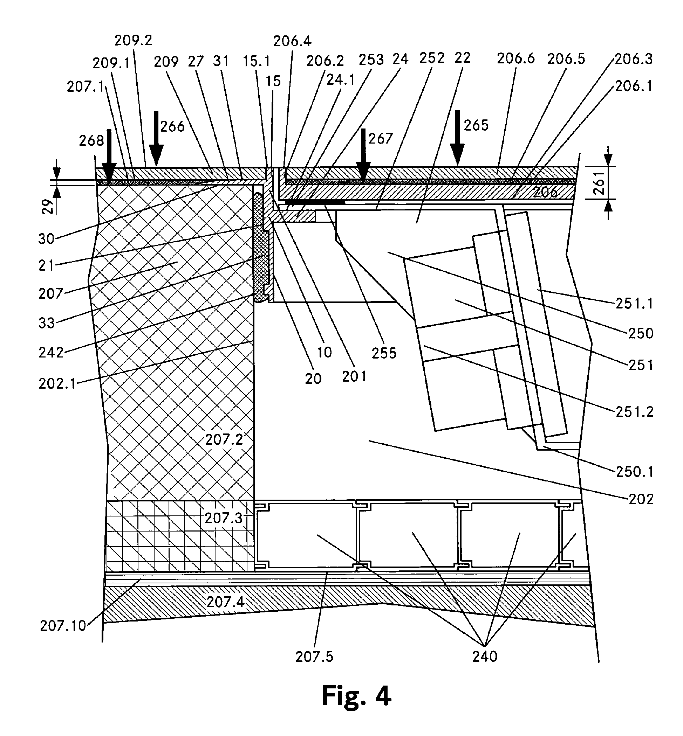

Figur 4 zeigt Ausschnittweise einen Querschnitt in einer Ebene senkrecht zu einer Oberfläche 207.1 eines Bodens 207 mit einer Bodenöffnung 202, in welchem eine erfindungsgemässe Fassung 201 mit dem in Fig. 1 dargestellten Profilquerschnitt 10 montiert ist. Die Fassung 201 ist dabei als rechteckiger Einbaurahmen ausgebildet und die Querschnittsebene der Schnittansicht liegt parallel zu einer der Längsseiten der Fassung 201. Der Durchtritt 22 der Fassung 201 bildet einen Zugang zur Bodenöffnung 202. Zwischen der Mantelfläche 21 der Fassung 210 und einer Innenwand 202.1 der Bodenöffnung 202 ist ein Klebstoff 242 derart eingebracht, dass die Klebenut 33 vom Klebstoff 242 weitgehend ausgefüllt ist und der Klebstoff 242 mit der Innenwand 202.1 in Berührung ist. Der Klebstoff 242 erstreckt sich zudem auf Bereiche der Mantelfläche 21 ausserhalb der Klebenut 33 und ist auch in diesen Bereichen in Kontakt mit der Innenwand 202.1 der Bodenöffnung 202.

Die Stossleiste 15 der Fassung 201 ist auf der Höhe 18 abgeschnitten, sodass die Schnittkante eine Oberkante 15.1 der Stossleiste 15 bildet. Die Höhe 18 der Oberkante 15.1 ist dabei derart bemessen, dass sie auf gleicher Höhe 266 mit einer Oberfläche 209.2 eines Endbelags 209 über der Bodenoberfläche 207.1 angeordnet ist. Da die Unterseite 30 des dünnen Flansches 27 auf der Bodenoberfläche aufliegt, entspricht eine Höhe der Oberkante 15.1 über der Bodenoberfläche 207.1 im Wesentlichen der Summe der vertikalen Dicken einer Klebeschicht 209.1 des Endbelags 209 und des Endbelags 209 selbst. In der Darstellung der Fig. 4 entspricht die Dicke 29 des dünnen Flansches 27, welcher in der Klebeschicht 209.1 angeordnet ist, der Dicke der Klebeschicht 209.1. Der auf der Klebeschicht 209.1 angeordnete Endbelag 209 liegt somit auf dem wandnahen Bereich 31 des dünnen Flansches 27 auf, wobei eine nicht dargestellte dünne Klebeschicht zwischen dem Bereich 31 und dem Endbelag 209 angeordnet sein kann, welche den Endbelag 209 auf dem Flansch 27 im Bereich 31 fixiert.

Der Boden 207 weist einen Unterlagsboden 207.2 auf, welcher über einer Trennschicht 207.3 angeordnet ist. Die Trennschicht 207.3 kann dabei z.B. eine Isolationsschicht umfassen. Die Trennschicht 207.3 wiederum ist auf einer Dampfsperre 207.10 verlegt, welche direkt auf einer tragenden Bodenstruktur 207.4 angeordnet ist. Die tragende Bodenstruktur 207.4 umfasst beispielsweise einen Betonboden. Die Bodenöffnung 202 erstreckt sich dabei mit gleichbleibendem horizontalen Querschnitt, d.h. ein Querschnitt in einer Ebene parallel zur Bodenoberfläche 207.1, durch den Unterlagsboden 207.2 und die Trennschicht 207.3 in vertikaler Richtung bis zu einer Oberfläche 207.5 der Dampfsperre 207.10. Auf dem Grund der Bodenöffnung 202, d.h. auf dem Bereich der Oberfläche der Dampfsperre 207.10, welcher durch die Bodenöffnung 202 zugänglich ist, sind Unterflurkanäle 240 angeordnet. Die Unterflurkanäle 240 dienen hierbei z.B. der Zuführung von Kabeln, auf welche durch die Bodenöffnung 202 zugegriffen werden kann. Es ist aber auch denkbar, dass durch die Bodenöffnung 202 Armaturen von Sanitärinstallationen erreichbar sind oder alle denkbaren Arten von Installation, welche sich zum Unterflureinbau eignen (z.B. auch Bodenheizungen).

Auf dem Flansch 24, welcher im Durchtritt 22 der Fassung 201 angeordnet ist, ist ein Einsatz 250 angeordnet, der in der Darstellung der Fig. 4 Steckdosen 251 trägt. Der Einsatz 250 ist dabei wannenförmig ausgebildet, wobei an einem oberen Rand 252 des Einsatzes bezüglich der Wannenform nach aussen eine Trageflansch 253 auskragt. Der Tragflansch 253 und der Einsatz 250 sind derart bemessen, dass der Tragflansch 253 bei in die Fassung 201 eingesetztem Einsatz 250 auf einer Oberseite 24.1 des Flansches 24 der Fassung 201 aufliegt und von diesem unterstützt wird. Der Einsatz 250 ist mit anderen Worten am Tragflansch 253 in die Fassung 201 gehängt, wobei eine Wanne 250.1 des wannenförmigen Einsatzes 250 frei in der Bodenöffnung 202 angeordnet ist, d.h. die Wanne ist nur vom Tragflansch 253 in der Fassung 201 gehalten. Dabei sind zusätzliche Haltevorrichtungen denkbar, welche den Einsatz 250 zusätzlich fixieren. Bevorzugt ist der Einsatz 250 aber nur an der Fassung 201 gehalten und bedarf keiner zusätzlichen Befestigung in der Bodenöffnung 202. Die Steckdosen 251 sind dabei derart angeordnet, dass ein für einen Stecker vorgesehener Bereich 251.1 innerhalb des wannenförmigen Einsatzes 250 angeordnet ist, während ein für die Kabelzuführung vorgesehener Bereich 251.2 auf einer Aussenseite auch den Einsatz 250 in die Bodenöffnung 202 hineinsteht. Damit können Kabel aus den Unterflurkanälen 240 zu den Steckdosen 251 geführt werden, während durch den Durchtritt der Fassung 201 die Steckdosen 251 einfach für einen Benutzer zugänglich sind.

Auf dem Tragflansch 253 des Einsatzes 250 sind Dämpfungselemente 255 angeordnet, welche z.B. als Gummipuffer ausgebildet sind. Ein Deckel 206 der Fassung 201 ist in geschlossenem Zustand dargestellt, in welchem er von dem Flansch 24 unterstützt und parallel zur Bodenoberfläche 207.1 angeordnet ist. Der Deckel 206 liegt dabei auf den Dämpfungselementen 255 auf und verschliesst den Durchtritt 22 zur Bodenöffnung 202. Der Deckel 206 weist dan seinem Rand eine vertikale nach oben über eine Oberseite 206.1 des Deckels 206 überstehende Stossleiste 206.2 auf, welche den Deckel 206 randseitig begrenzt. Eine Höhe 261 des Deckels 206 von einer Unterseite 206.3 zu einer Oberkante 206.4 der Stossleiste 206.2 ist dabei derart bemessen, dass die Summe der vertikalen Dicken des Tragflansches 253 des Einsatzes 250, der Dämpfungselemente 255 und der Höhe 261 einer Höhe der Oberkante 15.1 der Stosskante 15 über der Oberseite 24.1 des Flansches 24 entspricht. Somit liegt die Oberkante 206.4 der Stossleiste 206.2 des Deckels 206 bei geschlossenem Deckel 206 auf demselben Niveau über der Bodenoberfläche 209.2, wie die Oberkante 15.1 der Stossleiste 15.

Eine vertikale Dicke des Deckels 206 zwischen der Unterseite 206.3 und der Oberseite 206.1 des Deckels 206 ist dabei derart bemessen, dass die Oberseite 206.1 bei geschlossenem Deckel 206 auf einem Niveau 267 liegt, welcher dem Niveau 268 der Bodenfläche 209.2 entspricht. Dies wird insofern erreicht, indem eine vertikale Höhe zwischen Oberseite 24.1 des Flansches 24 und Unterseite 30 des dünnen Flansches 27 der Summe der Dicken des Tragflansches 253 des Einsatzes 250, der Dämpfungselemente 255 und des Deckels 206 entspricht. Da die vertikalen Dicken des Tragflansches 253 und der Dämpfungselemente 255 verhältnismässig klein sind im Vergleich zu einer vertikalen Dicke des Deckels 206, entspricht eine Dicke des Deckels 206 somit weitgehend dem vertikalen Abstand der Oberseite 24.1 des Tragflansches 24 zu einer Unterseite 30 des dünnen Flansches 27.

Diese Ausführung hat den Vorteil, dass der Deckel 206 innerhalb der Stossleiste 206.2 analog der umgebenden Bodenfläche 207.1 mit einer Klebstoffschicht 206.5 und einem Endbelag 206.6 versehen werden kann, sodass ein Bodenendniveau 265 auf dem Deckel 206 dem Bodenendniveau 266 des umgebenden Bodens 207 entspricht. Insbesondere liegen auch die Stossleisten 15 und 206.2 mit ihren Oberkanten 15.1 und 206.4 auf dem Bodenendniveau 265. Die Stossleisten 15 und 206.2 sind dabei weitgehend parallel angeordnet und weisen einen Toleranzabstand auf, welcher ein einfaches Öffnen des Deckels 206 erlaubt.

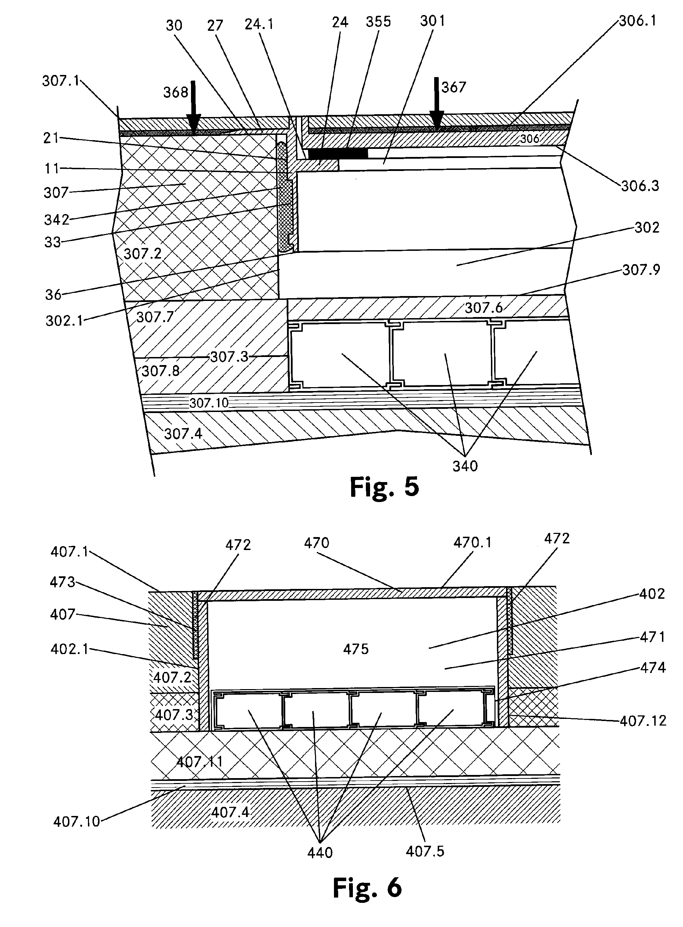

Figur 5 zeigt ausschnittweise einen Querschnitt in einer Ebene senkrecht zu einer Oberfläche 307.1 eines Bodens 307 mit einer Bodenöffnung 302, in welchem eine erfindungsgemässe Fassung 301 mit Rahmenprofilen, welche den in Fig. 1 dargestellten Profilquerschnitt 10 aufweisen, montiert ist. Die Fassung 301 ist dabei in der Funktion einer so genannten Zugdose vorgesehen, wobei kein Einsatz für z.B. Armaturen oder Steckdosen vorhanden ist, sondern die Fassung 301 mit einem Deckel 306 nur einen Zugang zur Bodenöffnung 302 bildet, in welcher Kabelkanäle 340 angeordnet sind.

Der Aufbau des Bodens 307 weicht vom Aufbau des Bodens 207 der Fig. 4 insofern ab, als dass die Unterflurkanäle 340 von einer Trennschicht 307.6 überdeckt sind. Zudem weist die der Trennschicht 207.3 entsprechende Trennschicht 307.3, welche zwischen einer Dampfsperre 307.10, welche auf einer tragenden Bodenstruktur 307.4 verlegt ist, und einem Unterflurboden 307.2 angeordnet ist, zwei geschichtete Lagen 307.7 und 307.8 auf. Wie bereits zuvor ausgeführt ist eine erfindungsgemässe Fassung mit Deckel jedoch unabhängig vom Aufbau für alle Arten von Böden geeignet und nicht auf die im Detail beschriebenen Bodenarten beschränkt.

Die Bodenöffnung 302 weist eine geringere vertikale Tiefe als die Bodenöffnung 202 der Fig. 4 auf, da z.B. kein Platz für einen Einsatz geschaffen werden muss. Die vertikale Tiefe der Bodenöffnung 302 ist jedoch derart bemessen, dass die Unterkante 36 der Wandung 11 der Fassung 301 von einer Oberseite 307.9 der Trennschicht 307.6 beabstandet ist. Die Fassung 301 ist somit ebenfalls nicht von unten her unterstützt, sondern wird analog zur Ausführungsform der Fig. 4 nur durch eine Klebeschicht 342 zwischen Mantelfläche 21/Klebenut 33 und Innenwand 302.1 der Bodenöffnung 302 in der Bodenöffnung 302 verankert bzw. gehalten. Die Fassung 301 ist dabei analog zur Fassung 201 der Fig. 4 in der Bodenöffnung 302 montiert.

Wie in Fig. 4 liegt der Deckel 306 auf Dämpfungselementen 355 auf, welche weitgehend den Dämpfungselementen 255 der Fig. 4 entsprechen. Im Gegensatz zur Ausführungsform der Fig. 4 ist jedoch aufgrund des nicht vorhandenen Einsatzes kein Tragflansch zwischen Dämpfungselementen 355 und Flansch 24 angeordnet. Um nun bei gleicher Bauweise des Deckels 306 und der Fassung 301 wie Deckel 206 bzw. Fassung 201 dieselben Vorteile hinsichtlich der Nivellierung einer Deckeloberseite 306.1 mit der umgebenden Bodenfläche 307.1 zu erreichen, können beispielsweise die vertikalen Dicken der Dämpfungselemente 355 derart bemessen sein, dass die Dicke des "fehlenden" Tragflansches des Einsatzes kompensiert wird. Konkret heisst dies, dass die Dämpfungselemente 355 eine vertikale Dicke aufweisen, welche der Summe der vertikalen Dicken des Tragflansches 253 und der Dämpfungselemente 255 entsprechen.

Erfindungsgemäss brauchen aber keine Dämpfungselemente 355 vorhanden zu sein und der Deckel 306 kann mit einer Unterseite 306.3 direkt auf der Oberseite 24.1 des Flansches 24 aufliegen. Eine vertikale Dicke des Deckels 306 zwischen Unterseite 306.3 und Oberseite 306.1 entspricht in diesem Fall der vertikalen Distanz der Oberseite 24.1 des Flansches 24 zur Bodenoberfläche 307.1 bzw. zur Unterseite 30 des dünnen Flansches 27. Somit ist die Oberseite 306.1 des Deckels 306 auf einem Niveau 367 angeordnet, welches dem Niveau 368 der Bodenoberfläche 307.1 entspricht.

Figur 6 zeigt einen Querschnitt in derselben Ebene wie in Fig. 4 und 5 durch eine Einbauhilfe 470, welche zur Erzeugung einer Bodenöffnung 402 dient. Die Bodenöffnung 402 ist dabei zur Montage einer erfindungsgemässen Fassung vorgesehen. Die Darstellung entspricht einem Zustand nach dem Einbringen eines Unterlagsbodens 407.2.

Auf einer tragenden Bodenstruktur 407.4 werden beim Erstellen des Bodens 407 je nach Bedarf verschiedene Trennschichten aufgebracht. In der Darstellung der Fig. 6 ist eine Dampfsperre 407.10 direkt auf einer Oberfläche 407.5 der tragenden Bodenstruktur 407.4 aufgebracht. Oberhalb der Dampfsperre 407.10 ist eine Schicht Isolationsmaterial 407.11 verlegt. Auf der Isolationsschicht 407.11 ist eine weitere Isolationsschicht 407.3 vorgesehen, welche eine Ausnehmung 407.12 mit den horizontalen Massen der zu erstellenden Bodenöffnung 402 aufweist. In der Ausnehmung 407.12 sind weiter Unterflurkanäle 440 verlegt, welche eine vertikale Dicke aufweisen, welche der vertikalen Dicke der Isolationsschicht 407.3 entspricht. Ausserhalb des Bereichs der Bodenöffnung 402 schliessen die Unterflurkanäle 440 somit mit der umgebenden Isolationsschicht 407.3 auf demselben Niveau ab.

Die Einbauhilfe 470 umfasst eine hohle Aussparungsschalung, beispielsweise eine Holz- oder Kunststoffkiste, und weist horizontale Aussenmasse auf, welche den horizontalen Innenmassen der späteren Bodenöffnung 402 entsprechen. Eine vertikale Höhe der Einbauhilfe 470 ist dabei derart bemessen, dass eine Oberseite 470.1 der Einbauhilfe 470 wenigstens auf dem Niveau einer Oberfläche 407.1 des Unterlagsbodens 407.2 oder höher angeordnet ist.

Vor dem Einbringen des Unterlagsbodens 407.2 wird die Einbauhilfe 470 in der gewünschten Position der späteren Bodenöffnung 402 auf der Isolationsschicht 407.11 bzw. auf der gewünschten Unterlage platziert. Dabei weist die Einbauhilfe 470 in Aussenwänden 471 Aussparungen 474 auf, sodass die Einbauhilfe 470 derart über den Unterflurkanälen 440 platziert werden kann, dass die Aussenwände zwischen Unterflurkanälen 440 und Isolationsschicht 407.3 bis auf die Isolationsschicht 407.11 hinunterreichen. Die Aussparungen 474 der Aussenwände 471 sind dabei derart bemessen (können z.B. vor Ort beim Platzieren der Einbauhilfe 470 entsprechend den Erfordernissen ausgeschnitten werden), dass ein Innenraum 475 der Einbauhilfe 470 weitgehend gegenüber dem beim Einbringen fliessfähigen Material des späteren Unterlagsbodens 407.2 abgedichtet ist.

Im vorliegenden Fall weist die Einbauhilfe 470 horizontale Aussenbemassungen auf, welche weitgehend den Innenmassen der Ausnehmung 407.12 entsprechen. Die Einbauhilfe 470 ist in Fig. 6 in die Ausnehmung 407.12 der Isolationsschicht 407.3 gestellt. Beim Einbringen des Unterlagsbodens 407.2, welcher z.B. Anhydrid oder Zement umfasst und vollflächig eingebracht wird, verhindert die Einbauhilfe 470, dass das Material des Unterlagsbodens 407.2 in den Bereich der späteren Bodenöffnung 402 einfliessen kann.

Nach dem Einbringen des Unterlagsbodens 407.2 wird die Einbauhilfe 470 entfernt. In der so erzeugten Bodenöffnung 402 kann dann eine erfindungsgemässe Fassung montiert werden. In die Fassung kann dann je nach Anforderung ein Einsatz eingehängt werden (z.B. als Verteilerdose) oder nur ein Zugang zu den Unterflurkanälen 440 geschaffen werden (z.B. als Zugdose).

Je nach Anforderung kann die Einbauhilfe 470 optional aussenseitig mit Strukturen 472 versehen sein, welche eine Strukturierung einer Innenwand 402.1 der Bodenöffnung 402 ergeben. In der Fig. 6 umfassen die Strukturen 472 einen horizontal die Einbauhilfe 470 umfassenden Stellstreifen 473, welcher aufgrund des so erreichten grösseren horizontalen Querschnitts der Einbauhilfe 470 eine Aufweitung der späteren Bodenöffnung 402 nach oben hin erwirkt. Wird der Stellstreifen 473 nach dem Einbringen des Unterlagsbodens 407.2 entfernt, ergibt sich zudem eine gegebenenfalls wünschenswerte Aufrauung der Innenwand 402.1 in einem Bereich einer späteren Klebung zur Montage einer erfindungsgemässen Fassung.

Bei anderen Arten des Bodenaufbaus, wie z.B. Gipsplatten, Spanplatten, Doppelbodenplatten, Holzlattungen oder Riemenböden ist die oben beschriebene Einbauhilfe nicht erforderlich, da die Bodenöffnung einfach in den Boden geschnitten werden kann. Auch bei bereits vorhandenen Bodenaufbauten bzw. bei Umbauten können die erfindungsgemässen Bodendosen ohne Einbauhilfe eingesetzt werden. Die Einbauhilfe vereinfacht die Schaffung einer Bodenöffnung in den Fällen, in welchen ein Unterlagsboden aus einem beim Einbringen weitgehend fliessfähigen Material eingebracht wird. Ein späteres z.B. Ausspitzen einer Bodenöffnung ist nicht erforderlich. Zudem kann mit der Einbauhilfe auf vorteilhafte Art, die Bodenöffnung exakt über den Unterflurkanälen positioniert werden, sodass die spätere Bodenöffnung optimal an die Erfordernisse angepasst ist.

Figur 7 zeigt eine in vertikaler Richtung auseinandergezogene perspektivische Explosionsansicht einer erfindungsgemässen Fassung 501 mit Deckel 506 und einem Einsatz 550. Fassung 501, Einsatz 550 und Deckel 506 sind dabei derart in vertikaler Richtung beabstandet dargestellt, wie sich aus einer Einbaureihenfolge der drei Elemente ergibt.

Die Fassung 501 weist dabei 4 längliche Profilleisten 580.1-580.4 auf, welche ein Querschnittsprofil 100 gemäss der Darstellung der Fig. 2 aufweisen. Die Fassung 501 ist dabei als quadratischer Rahmen ausgebildet, welcher den vertikalen Durchtritt 122 horizontal allseitig umfasst. Die Profilleisten 580.1-580.4 bilden dabei jeweils eine Kante der quadratischen Fassung 501 und sind an den Ecken über eine Gehrung auf Stoss verbunden (z.B. verschweisst oder verklebt). Jede der Profilleisten 580.1-580.4 weist dabei einen aussenseitig auf der jeweiligen Mantelfläche 121 angeordneten dünnen Flansch auf, welche zusammen den aussenseitig umlaufenden dünnen Flansch 127 einer erfindungsgemässen Montagehaltevorrichtung ergeben. Unterhalb des umlaufenden Flansches 127 ist die umlaufende Klebenut 133 ausgebildet, welche sich aus Teilabschnitten auf jeder Profilleiste 580.1-580.4 zusammensetzt. Auf Innenwänden 120 der Profilleisten 580.1-580.4 sind jeweils Flansche 124 als Auflage zur Unterstützung des Einsatzes 550 und des Deckels 506 ausgebildet.

Die Fassung 501 ist dabei mit 4 Stossleistenelementen 515.1-515.4 versehen, welche gemäss der Fig. 2 und 3 ausgebildet und in den Nuten 105 der Profilleisten 580.1-580.4 gehaltert sind. Die Stossleistenelemente 515.1-515.4 stossen an den Ecken der Fassung zusammen und bilden somit zusammen eine quadratische Stossleiste 515, welche über die Fassung 501 nach oben übersteht.

Der Einsatz 550 ist wannenförmig ausgebildet und weist einen an einem oberen Rand 552 nach aussen auskrangenden umlaufenden Tragflansch 553 auf. Am Tragflansch 553 kann der Einsatz 550 in den Durchtritt 122 der Fassung 501 gehängt werden, wobei der Einsatz 550 dann in der Fassung 501 von dem Flansch 124 unterstützt ist. In Seitenwänden 550.4 einer länglichen Wanne 550.1 des Einsatzes 550 sind Öffnungen 550.2 ausgebildet, in welchen z.B. Steckdosen oder andere Armaturen befestigt werden können (nicht dargestellt). Der Einsatz 550 weist jeweils an Längsenden der Wanne 550.1 zudem Kabelzuführungen 550.3 auf, durch welche Kabel in den Innenraum des wannenförmigen Einsatzes 550 zu den Steckdosen geführt werden können.

Der Deckel 506 weist hierzu den Kabelzuführungen 550.3 entsprechende Aussparungen 506.8 auf, welche bei geschlossenem Deckel 506 einen Durchtritt von Kabeln von oberhalb des Bodens durch die Kabelführungen 550.3 zu den Steckdosen erlaubt. Die Aussparungen 506.8 erstrecken sich den Kabelführungen 550.3 entsprechend mittig an zwei Längskanten des Deckelumrisses angeordnet nach innen.

Längs seiner Umrandung 506.7 weist der Deckel 506 eine nach oben ragende Stossleiste 506.2 auf, welche sich senkrecht zu einer Deckeloberfläche 506.1 nach oben erstreckt und die gesamte Deckeloberfläche 506.1 einfasst und somit einen Abschluss für einen Endbelag (nicht dargestellt) des Deckels 506 ergibt. Auf einer Unterseite 506.3 des Deckels 506 sind längs der Umrandung 506.7 Dämpfungselemente 555 angebracht, mit welchen der Deckel 506 in geschlossenem Zustand auf einer Oberseite des Tragflansches 553 aufliegt. In geschlossenem Zustand sind der Einsatz 550 sowie der Deckel 506 vom Flansch 124 der Profilleisten 580.1-580.4 der Fassung 501 unterstützt.

Alle in der Detailbeschreibung gemachten relativen Bemassungen verstehen sich als exemplarische Werte von speziellen Ausführungsformen und können je nach Anforderung angepasst werden. Beispielsweise können Wandstärken und Flanschlängen je nach Anforderung in anderen Verhältnissen zueinander stehen, als oben ausgeführt. Ausserdem hängen die Bemassungen auch von einer Grösser der Fassung ab. Bei verhältnismässig grossen Fassungen kann es z.B. erforderlich sein, die Wandstärke der Wandung der Fassung zu vergrössern, während die Dicke des dünnen Flansches der Montagehaltevorrichtung für alle Grössen der Fassung im Bereich einer Dicke der Klebeschicht eines Endbelags liegen soll.

Zusammenfassend ist festzustellen, dass die erfindungsgemässe Fassung eine einfach zu montierende und vielseitige Lösung für den Zugang zu Unterflur-Installationen in einem Boden, aber auch in Wänden oder Decken bereitstellt. Die Anwendung der Erfindung ist dabei nicht auf elektrische oder sanitäre Installationen festgelegt, sondern kann immer zur Anwendung kommen, wenn ein verschliessbarer Zugang zu einer Wand- oder Bodenöffnung erforderlich ist. Zusammenfassend sind besonders die folgenden Vorteile hervorzuheben:
i) Einfache Montage (Verklebung, Montagehaltevorrichtung);
ii) selbstjustierende Montage (keine Justierung gegenüber tragendem Boden erforderlich);
iii) sofortige Belastbarkeit nach Montage (Montagehaltevorrichtung);
iv) grosse Einbautoleranz (verschiedene Dicken der Verklebung);
v) vielseitige Anwendbarkeit (Unabhängigkeit vom Bodenaufbau, geeignet für weitgehend alle denkbaren Bodenbeläge);
vi) keine Überhöhungen eines Endbelags an der Fassung bzw. des Deckels (dünner Flansch in Klebschicht/Glattstrich);
vii) keine Durchdringung einer Trennschicht durch Justiervorrichtungen (keine Abstützung auf tragendem Boden erforderlich);
viii) Nivellierung des Deckels, unabhängig Genauigkeit des Bodenniveaus (Selbstjustierung geschieht über Montagehaltevorrichtung lokal, gegenüber dem Rand der Bodenöffnung).

## Patentansprüche

1. Anordnung mit einer in einer Bodenöffnung (102) einer Bodenfläche (107.1) befestigten Fassung (101) mit einem Deckel (106), wobei die Fassung (101) zur Halterung eines Einsatzes (250) ausgebildet sein kann, mit einem Durchtritt (22, 122), welcher bei montierter Fassung (101) einen mit dem Deckel (106) verschliessbaren Zugang zu der Bodenöffnung (102) bildet, wobei bei verschlossenem Durchtritt (22, 122) eine Oberseite (106.2) des Deckels (106) weitgehend koplanar zu der die Bodenöffnung (102) aufweisenden Bodenfläche (107.1) angeordnet ist und die Fassung (101) eine bezüglich des Durchtritts (22, 122) aussen liegende Mantelfläche (21, 121) aufweist, auf welcher in Montagerichtung ein Hinterschnitt in Form einer Nut (33, 133) ausgebildet ist, **dadurch gekennzeichnet, dass** die Fassung auf einfache Art durch eine Verklebung innerhalb der Bodenöffnung befestigt ist, wobei die Nut (33, 133) eine Klebenut ist und einen Klebstoff zur Verklebung der Fassung (101) an ihrer Mantelfläche (21, 121) mit einer Innenwandung (102.1) der Bodenöffnung (102) aufnimmt und der durch die Nut gebildete Hinterschnitt den Klebstoff derart umgreift, dass die Fassung (101) bei abgebundenem Klebstoff sicher im Klebstoff verankert ist und eine unlösbar an der Fassung (101) angeformte Montagehaltevorrichtung (27, 127) welche einen als Anschlag ausgebildeten Flansch umfasst, sodass bei montierter Fassung (101) die Unterseite (30,130) des Flansches (27,127) auf der Bodenfläche (107.1) aufliegt und welche die Fassung (101) während der Montage, und insbesondere während des Abbindens des Klebstoffs, in der Bodenöffnung (102) halten kann, aber derart dünn ausgebildet ist, dass sie nicht endgültig tragend ist und wobei eine maximale Dicke des Flansches 1 mm nicht übersteigt.

2. Anordnung nach Anspruch 1, **dadurch gekennzeichnet, dass** die Fassung (101) den Durchtritt (22, 122) vollständig rahmenartig umschliesst und vorzugsweise die Nut (33, 133) auf der aussen liegenden Mantelfläche (21, 121) den Durchtritt (22, 122) vollständig umläuft.

3. Anordnung nach einem der Ansprüche 1 bis 2, **dadurch gekennzeichnet, dass** im Durchtritt (22, 122) der Fassung (101) eine Auflage (24, 124) derart ausgebildet ist, dass die Auflage (24) bei verschlossenem Durchtritt (22, 122) den Deckel (106) unterstützt, wobei insbesondere die Auflage (24) einen im Durchtritt (22, 122) der Fassung (101) an einer Innenwand (20, 120) der Fassung (101) ausgebildeten Vorsprung (24, 124) umfasst, vorzugsweise einen an der Innenwand (20, 120) umlaufenden Flansch (24, 124).

4. Anordnung nach einem der Ansprüche 1 bis 3, **dadurch gekennzeichnet, dass** die Auflage (24, 124) für den Deckel (106) derart ausgebildet ist, dass sie auch zur Halterung des Einsatzes (250) geeignet ist.

5. Anordnung nach einem der Ansprüche 1 bis 4, **dadurch gekennzeichnet, dass** die Montagehaltevorrichtung (27, 127) die Fassung (101) während der Montage, und insbesondere während des Abbindens des Klebstoffs, in der Bodenöffnung (102) hält, wobei die Montagehaltevorrichtung (27, 127) unlösbar an die Fassung (101) angeformt ist, insbesondere derart, dass die Montagehaltevorrichtung (27, 127) bei in der Bodenöffnung (102) montierter Fassung (101) oberhalb der Klebenut (33, 133) angeordnet ist.

6. Anordnung nach Anspruch **5, dadurch gekennzeichnet, dass** die Montagehaltevorrichtung (27, 127) einen auf der aussen liegenden Mantelfläche (21, 121) ausgebildeten Anschlag (27, 127) umfasst, welcher derart über die Mantelfläche (21, 121) übersteht, dass bei der Montage der Fassung (101) eine Unterseite (30, 130) des Anschlags (27, 127) an die Bodenfläche (107.1) anstösst.

7. Anordnung nach Anspruch 3 oder 4 in Verbindung mit Anspruch 6, **dadurch gekennzeichnet, dass** die Auflage (24, 124) für den Deckel (106) und der Anschlag (27 ,127) derart an der Fassung (101) angeordnet sind, dass eine Oberseite (106.2) des Deckels bei verschlossenem Durchtritt (22, 122) bezüglich einer Richtung senkrecht zur Oberseite (106.2) des Deckels (106) im Wesentlichen auf demselben Niveau angeordnet ist, wie die Unterseite (30, 130) des Anschlags (27, 127) und dabei insbesondere die Oberseite (106.2) des Deckels (106) bei montierter Fassung (101) und bei verschlossenem Durchtritt (22, 122) im Wesentlichen auf demselben Niveau liegt wie die Bodenfläche (107.1).

8. Anordnung nach einem der Ansprüche 6 oder 7, **dadurch gekennzeichnet, dass** der Anschlag (27, 127) der Montagehaltevorrichtung einen aussenseitig an der Mantelfläche (21, 121) umlaufenden Flansch (27, 127) umfasst, wobei die besagte Unterseite (30, 130) des Anschlags (27, 127) eine Unterseite (130) des Flansches (27, 127) umfasst, sodass bei montierter Fassung (101) die Unterseite (30, 130) des Flansches (27, 127) auf der Bodenfläche (107.1) aufliegt.

9. Anordnung nach Anspruch 8, **dadurch gekennzeichnet, dass** sich eine Dicke des Flansches (27, 127) mit zunehmendem Abstand vom Durchtritt (22, 122) verringert, vorzugsweise eine maximale Dicke des Flansches (27, 127) im Bereich einer typischen Dicke einer Klebeschicht (109.1) für einen Endbelag (109) des Bodens liegt und eine maximale Dicke des Flansches 1 mm nicht übersteigt und vorzugsweise im Bereich von 0.5 bis 1 mm liegt.

10. Anordnung nach einem der Ansprüche 1 bis 9, **dadurch gekennzeichnet, dass** an einer Oberseite der Fassung (101) eine senkrecht zur Bodenfläche (107.1) angeordnete Nut (105) ausgebildet ist, welche für die Aufnahme von steckbaren Stossleisten (115) für einen Endbelag (109) des Bodens vorgesehen ist.

11. Anordnung nach einem der Ansprüche 1 bis 10, **dadurch gekennzeichnet, dass** an einer Oberseite der Fassung senkrecht zur Bodenfläche Stossleisten (15) für einen Endbelag angeformt sind.

12. Anordnung nach einem der Ansprüche 1 bis 11 mit einem Einsatz (250), welcher derart ausgebildet ist, dass er in der Fassung (201) gehaltert sein kann.

13. Anordnung nach Anspruch 12, **dadurch gekennzeichnet, dass** der Einsatz (250) Auflageelemente (253) aufweist, welche bei montierter Fassung (201) und in der Fassung (201) gehaltertem Einsatz (250) zwischen der Auflage (224) für den Deckel (206) und dem Deckel (206) angeordnet sind.

14. Verfahren zur Montage einer Fassung in einer Bodenöffnung gemäss einer Anordnung nach einem der Ansprüche 1 bis 11, wobei die Fassung unter Verwendung eines Klebstoffs derart in die Bodenöffnung eingesetzt wird, dass der Klebstoff in Kontakt mit der Mantelfläche der Fassung und der Innenwandung der Bodenöffnung ist, wobei der Klebstoff zumindest teilweise in die Klebenut eingebracht wird.

15. Verfahren nach Anspruch 14 zur Montage einer Fassung in einer Bodenöffnung gemäss der Anordnung des Anspruchs 6, wobei beim Einsetzen der Fassung in die Bodenöffnung die Unterseite des Anschlags mit der Bodenöffnung in Kontakt gebracht wird.

16. Fassung mit Deckel (106) für eine Anordnung gemäss einem der Ansprüche 1 bis 13, wobei die Fassung (101) mit einem Durchtritt (22, 122) versehen ist, welcher bei montierter Fassung (101) einen mit dem Deckel (106) verschliessbaren Zugang zu der Bodenöffnung (102) bildet, wobei bei verschlossenem Durchtritt (22, 122) eine Oberseite (106.2) des Deckels (106) weitgehend koplanar zu der die Bodenöffnung (102) aufweisenden Bodenfläche (107.1) angeordnet ist, und wobei die Fassung (101) eine bezüglich des Durchtritts (22, 122) aussen liegende Mantelfläche (21, 121) aufweist, auf welcher in Montagerichtung ein Hinterschnitt in Form einer Nut (33, 133) ausgebildet ist, **dadurch gekennzeichnet, dass** die Nut eine Klebenut ist, welche für die Aufnahme eines Klebstoffs zur Verklebung der Fassung (101) an ihrer Mantelfläche (21, 121) mit einer Innenwandung (102.1) der Bodenöffnung (102) vorgesehen ist und die Nut (33, 133) den Klebstoff derart umgreifen kann, dass die Fassung bei abgebundenem Klebstoff sicher im Klebstoff verankert ist und eine unlösbar an der Fassung (101) angeformte Montagehaltevorrichtung (27, 127) welche einen als Anschlag ausgebildeten Flansch umfasst, sodass bei montierter Fassung (101) die Unterseite (30,130) des Flansches (27,127) auf der Bodenfläche (107.1) aufliegt und welche die Fassung (101) während der Montage, und insbesondere während des Abbindens des Klebstoffs, in der Bodenöffnung (102) halten kann, aber derart dünn ausgebildet ist, dass sie nicht endgültig tragend ist und wobei eine maximale Dicke des Flansches 1 mm nicht übersteigt.

17. Einbausatz für eine Anordnung gemäss einem der Ansprüche 1 bis 13, umfassend:
eine Fassung (101) mit einem Deckel (106) für die Montage in einer Bodenöffnung (402), wobei die Fassung (101) zur Halterung eines Einsatzes (250) ausgebildet sein kann, mit einem Durchtritt (22, 122), welcher bei montierter Fassung (101) einen mit dem Deckel (106) verschliessbaren Zugang zu der Bodenöffnung (102) bildet, wobei bei verschlossenem Durchtritt (22, 122) eine Oberseite (106.2) des Deckels (106) weitgehend koplanar zu der die Bodenöffnung (102) aufweisenden Bodenfläche (107.1) angeordnet werden kann und die Fassung (101) eine bezüglich des Durchtritts (22, 122) aussen liegende Mantelfläche (21, 121) aufweist, auf welcher in Montagerichtung ein Hinterschnitt in Form einer Nut (33, 133) ausgebildet ist **dadurch gekennzeichnet, dass**
eine unlösbar an der Fassung (101) angeformte Montagehaltevorrichtung (27, 127) welche einen als Anschlag ausgebildeten Flansch umfasst, sodass bei montierter Fassung (101) die Unterseite (30,130) des Flansches (27,127) auf der Bodenfläche (107.1) aufliegt und welche die Fassung (101) während der Montage, und insbesondere während des Abbindens des Klebstoffs, in der Bodenöffnung (102) halten kann, aber derart dünn ausgebildet ist, dass sie nicht endgültig tragend ist und wobei eine maximale Dicke des Flansches 1 mm nicht übersteigt, und dass der Einbausatz eine Einbauhilfe (470) umfasst, welche zur Schaffung der für die Fassung (101) geeigneten Bodenöffnung (402) beim Einbringen eines Unterlagsbodens (407.2) eine entsprechende Aussparung freihält.

## Claims

1. Arrangement with a holder (101) with a cover (106), which holder is fastened in a floor opening (102) of a floor surface (107.1), wherein the holder (101) can be designed to hold an insert (250), with a passage (22, 122) which, with the holder (101) mounted, forms an access to the floor opening (102) that can be closed by the cover (106), wherein, with the passage (22, 122) closed, an upper side (106.2) of the cover (106) is arranged in a largely coplanar manner with respect to the floor surface (107.1) having the floor opening (102), and the holder (101) has a lateral surface (21, 121) which is situated externally with respect to the passage (22, 122) and on which an undercut in the form of a groove (33, 133) is formed in the mounting direction, **characterized in that** the holder is fastened in a simple manner within the floor opening by an adhesive bond, wherein the groove (33, 133) is an adhesive groove and receives an adhesive for adhesively bonding the holder (101) at its lateral surface (21, 121) to an inner wall (102.1) of the floor opening (102), and the undercut formed by the groove encompasses the adhesive in such a way that, when the adhesive has set, the holder (101) is securely anchored in the adhesive, and a mounting holding device (27, 127) which is integrally formed on the holder (101) in a non-releasable manner, which mounting holding device comprises a flange formed as a stop such that, with the holder (101) mounted, the underside (30, 130) of the flange (27, 127) bears on the floor surface (107.1), and which mounting holding device can hold the holder (101) in the floor opening (102) during mounting, and in particular during the setting of the adhesive, but is designed to be thin in such a way that it is not finally load-bearing, and wherein a maximum thickness of the flange does not exceed 1 mm.

2. Arrangement according to Claim 1, **characterized in that** the holder (101) completely encloses the passage (22, 122) in a frame-like manner and the groove (33, 133) on the external lateral surface (21, 121) preferably runs completely around the passage (22, 122).

3. Arrangement according to either of Claims 1 and 2, **characterized in that** a support (24, 124) is formed in the passage (22, 122) of the holder (101) in such a way that, with the passage (22, 122) closed, the support (24) supports the cover (106), wherein, in particular, the support (24) comprises a projection (24, 124) formed in the passage (22, 122) of the holder (101) on an inner wall (20, 120) of the holder (101), preferably a flange (24, 124) running around on the inner wall (20, 120).

4. Arrangement according to one of Claims 1 to 3, **characterized in that** the support (24, 124) for the cover (106) is formed in such a way that it is also suitable for holding the insert (250).

5. Arrangement according to one of Claims 1 to 4, **characterized in that** the mounting holding device (27, 127) holds the holder (101) in the floor opening (102) during mounting, and in particular during the setting of the adhesive, wherein the mounting holding device (27, 127) is integrally formed on the holder (101) in a non-releasable manner, in particular in such a way that, with the holder (101) mounted in the floor opening (102), the mounting holding device (27, 127) is arranged above the adhesive groove (33, 133).

6. Arrangement according to Claim 5, **characterized in that** the mounting holding device (27, 127) comprises a stop (27, 127) which is formed on the external lateral surface (21, 121) and which projects beyond the lateral surface (21, 121) in such a way that, when mounting the holder (101), an underside (30, 130) of the stop (27, 127) butts against the floor surface (107.1).

7. Arrangement according to Claim 3 or 4 in conjunction with Claim 6, **characterized in that** the support (24, 124) for the cover (106) and the stop (27, 127) are arranged on the holder (101) in such a way that, with the passage (22, 122) closed, an upper side (106.2) of the cover is arranged, with respect to a direction perpendicular to the upper side (106.2) of the cover (106), substantially at the same level as the underside (30, 130) of the stop (27, 127) and, at the same time, with the holder (101) mounted and with the passage (22, 122) closed, in particular the upper side (106.2) of the cover (106) lies substantially at the same level as the floor surface (107.1).

8. Arrangement according to either of Claims 6 and 7, **characterized in that** the stop (27, 127) of the mounting holding device comprises a flange (27, 127) running around on the outer side of the lateral surface (21, 121), wherein the said underside (30, 130) of the stop (27, 127) comprises an underside (130) of the flange (27, 127) such that, with the holder (101) mounted, the underside (30, 130) of the flange (27, 127) bears on the floor surface (107.1).

9. Arrangement according to Claim 8, **characterized in that** a thickness of the flange (27, 127) decreases with an increasing distance from the passage (22, 122), and preferably a maximum thickness of the flange (27, 127) lies in the range of a typical thickness of an adhesive layer (109.1) for an end covering (109) of the floor and a maximum thickness of the flange does not exceed 1 mm and is preferably in the range from 0.5 to 1 mm.

10. Arrangement according to one of Claims 1 to 9, **characterized in that** a groove (105) arranged perpendicularly to the floor surface (107.1) is formed on an upper side of the holder (101) and is provided for receiving pluggable abutment strips (115) for an end covering (109) of the floor.

11. Arrangement according to one of Claims 1 to 10, **characterized in that** abutment strips (15) for an end covering are integrally formed on an upper side of the holder perpendicular to the floor surface.

12. Arrangement according to one of Claims 1 to 11 with an insert (250) which is formed in such a way that it can be held in the holder (201).

13. Arrangement according to Claim 12, **characterized in that** the insert (250) has bearing elements (253) which, with the holder (201) mounted and insert (250) held in the holder (201), are arranged between the support (224) for the cover (206) and the cover (206).

14. Method for mounting a holder in a floor opening in accordance with an arrangement according to one of Claims 1 to 11, wherein the holder is inserted into the floor opening using an adhesive in such a way that the adhesive is in contact with the lateral surface of the holder and the inner wall of the floor opening, wherein the adhesive is introduced at least partially into the adhesive groove.

15. Method according to Claim 14 for mounting a holder in a floor opening in accordance with the arrangement of Claim 6, wherein the underside of the stop is brought into contact with the floor opening when inserting the holder into the floor opening.

16. Holder with cover (106) for an arrangement according to one of Claims 1 to 13, wherein the holder (101) is provided with a passage (22, 122) which, with the holder (101) mounted, forms an access to the floor opening (102) that can be closed by the cover (106), wherein, with the passage (22, 122) closed, an upper side (106.2) of the cover (106) is arranged in a largely coplanar manner with respect to the floor surface (107.1) having the floor opening (102), and wherein the holder (101) has a lateral surface (21, 121) which is situated externally with respect to the passage (22, 122) and on which an undercut in the form of a groove (33, 133) is formed in the mounting direction, **characterized in that** the groove is an adhesive groove which is provided for receiving an adhesive for adhesively bonding the holder (101) at its lateral surface (21, 121) to an inner wall (102.1) of the floor opening (102), and the groove (33, 133) can encompass the adhesive in such a way that, when the adhesive has set, the holder is securely anchored in the adhesive, and a mounting holding device (27, 127) which is integrally formed on the holder (101) in a non-releasable manner, which mounting holding device comprises a flange formed as a stop such that, with the holder (101) mounted, the underside (30, 130) of the flange (27, 127) bears on the floor surface (107.1), and which mounting holding device can hold the holder (101) in the floor opening (102) during mounting, and in particular during the setting of the adhesive, but is designed to be thin in such a way that it is not finally load-bearing, and wherein a maximum thickness of the flange does not exceed 1 mm.

17. Installation kit for an arrangement according to one of Claims 1 to 13, comprising: a holder (101) with a cover (106) for mounting in a floor opening (402), wherein the holder (101) can be designed to hold an insert (250), with a passage (22, 122) which, with the holder (101) mounted, forms an access to the floor opening (102) that can be closed by the cover (106), wherein, with the passage (22, 122) closed, an upper side (106.2) of the cover (106) can be arranged in a largely coplanar manner with respect to the floor surface (107.1) having the floor opening (102), and the holder (101) has a lateral surface (21, 121) which is situated externally with respect to the passage (22, 122) and on which an undercut in the form of a groove (33, 133) is formed in the mounting direction, **characterized in that** a mounting holding device (27, 127) which is integrally formed on the holder (101) in a non-releasable manner, which mounting holding device comprises a flange formed as a stop such that, with the holder (101) mounted, the underside (30, 130) of the flange (27, 127) bears on the floor surface (107.1), and which mounting holding device can hold the holder (101) in the floor opening (102) during mounting, and in particular during the setting of the adhesive, but is designed to be thin in such a way that it is not finally load-bearing, and wherein a maximum thickness of the flange does not exceed 1 mm, and **in that** the installation kit comprises an installation aid (470) which, in order to provide the floor opening (402) suitable for the holder (101), keeps free a corresponding recess when fitting a subfloor (407.2).

## Revendications

1. Agencement comprenant un cadre (101) fixé dans une ouverture de fond (102) d'une surface de fond (107.1), comprenant un couvercle (106), le cadre (101) pouvant être réalisé pour retenir un insert (250), comprenant un passage (22, 122) qui, lorsque le cadre (101) est monté, forme un accès à l'ouverture de fond (102), pouvant être fermé avec un couvercle (106), un côté supérieur (106.2) du couvercle (106), lorsque le passage (22, 122) est fermé, étant disposé essentiellement de manière coplanaire à la surface de fond (107.1) présentant l'ouverture de fond (102), et le cadre (101) présentant une surface d'enveloppe (21, 121) située à l'extérieur par rapport au passage (22, 122), sur laquelle, dans la direction de montage, est réalisée une contre-dépouille sous forme de rainure (33, 133), **caractérisé en ce que** le cadre est fixé de manière simple par un collage à l'intérieur de l'ouverture de fond, la rainure (33, 133) étant une rainure de collage et recevant un adhésif pour le collage du cadre (101) sur sa surface d'enveloppe (21, 121) avec une paroi interne (102.1) de l'ouverture de fond (102), et la contre-dépouille formée par la rainure venant en prise autour de l'adhésif de telle sorte que le cadre (101) soit fermement ancré dans l'adhésif lorsque l'adhésif a pris, et un dispositif de retenue de montage (27, 127) formé de manière imperdable sur le cadre (101), qui comprend une bride réalisée en tant que butée de telle sorte que lorsque le cadre (101) est monté, le côté inférieur (30, 130) de la bride (27, 127) repose sur la surface de fond (107.1) et qui peut retenir le cadre (101) pendant le montage, et en particulier pendant la prise de l'adhésif, dans l'ouverture de fond (102) mais est réalisé de manière suffisamment mince pour ne pas être porteur en définitive, et une épaisseur maximale de la bride ne dépassant pas 1 mm.

2. Agencement selon la revendication 1, **caractérisé en ce que** le cadre (101) entoure le passage (22, 122) complètement en forme de cadre et de préférence la rainure (33, 133) entoure complètement le passage (22, 122) sur la surface d'enveloppe extérieure (21, 121).

3. Agencement selon l'une quelconque des revendications 1 à 2, **caractérisé en ce que** dans le passage (22, 122) du cadre (101) est réalisé un appui (24, 124) de telle sorte que l'appui (24), lorsque le passage (22, 122) est fermé, supporte le couvercle (106), l'appui (24) comprenant notamment une saillie (24, 124) réalisée dans le passage (22, 122) du cadre (101) sur une paroi interne (20, 120) du cadre (101), de préférence une bride (24, 124) disposée sur la périphérie de la paroi interne (20, 120).

4. Agencement selon l'une quelconque des revendications 1 à 3, **caractérisé en ce que** l'appui (24, 124) pour le couvercle (106) est réalisé de telle sorte qu'il soit également approprié pour retenir l'insert (250).

5. Agencement selon l'une quelconque des revendications 1 à 4, **caractérisé en ce que** le dispositif de retenue de montage (27, 127) retient le cadre (101) dans l'ouverture de fond (102) pendant le montage, et en particulier pendant la prise de l'adhésif, le dispositif de retenue de montage (27, 127) étant formé de manière imperdable sur le cadre (101), en particulier de telle sorte que le dispositif de retenue de montage (27, 127) soit disposé au-dessus de la rainure de collage (33, 133) lorsque le cadre (101) est monté dans l'ouverture de fond (102).

6. Agencement selon la revendication 5, **caractérisé en ce que** le dispositif de retenue de montage (27, 127) comprend une butée (27, 127) réalisée sur la surface d'enveloppe extérieure (21, 121), laquelle fait saillie au-delà de la surface d'enveloppe (21, 121) de telle sorte que lors du montage du cadre (101), un côté inférieur (30, 130) de la butée (27, 127) bute contre la surface de fond (107.1).

7. Agencement selon la revendication 3 ou 4 en association avec la revendication 6, **caractérisé en ce que** l'appui (24, 124) pour le couvercle (106) et la butée (27, 127) sont disposés sur le cadre (101) de telle sorte qu'un côté supérieur (106.2) du couvercle, lorsque le passage (22, 122) est fermé, soit disposé par rapport à une direction perpendiculaire au côté supérieur (106.2) du couvercle (106), essentiellement au même niveau que le côté inférieur (30, 130) de la butée (27, 127) et en l'occurrence en particulier que le côté supérieur (106.2) du couvercle (106) soit situé essentiellement au même niveau que la surface de fond (107.1) lorsque le cadre (101) est monté et que le passage (22, 122) est fermé.

8. Agencement selon l'une quelconque des revendications 6 ou 7, **caractérisé en ce que** la butée (27, 127) du dispositif de retenue de montage comprend une bride (27, 127) disposée sur la périphérie du côté extérieur sur la surface d'enveloppe (21, 121), ledit côté inférieur (30, 130) de la butée (27, 127) comprenant un côté inférieur (130) de la bride (27, 127), de telle sorte que lorsque le cadre (101) est monté, le côté inférieur (30, 130) de la bride (27, 127) repose sur la surface de fond (107.1).

9. Agencement selon la revendication 8, **caractérisé en ce qu'**une épaisseur de la bride (27, 127) diminue avec l'augmentation de la distance au passage (22, 122), de préférence une épaisseur maximale de la bride (27, 127) se situe dans la région d'une épaisseur typique d'une couche de colle (109.1) pour une garniture d'extrémité (109) du fond et une épaisseur maximale de la bride ne dépasse pas 1 mm et se situe de préférence dans une plage de 0,5 à 1 mm.

10. Agencement selon l'une quelconque des revendications 1 à 9, **caractérisé en ce qu'**au niveau d'un côté supérieur du cadre (101) est réalisée une nervure (105) disposée perpendiculairement à la surface de fond (107.1), qui est prévue pour recevoir des bandes antichocs enfichables (115) pour une garniture d'extrémité (109) du fond.

11. Agencement selon l'une quelconque des revendications 1 à 10, **caractérisé en ce qu'**au niveau d'un côté supérieur du cadre, perpendiculairement à la surface de fond, sont formées des bandes antichocs (15) pour une garniture d'extrémité.

12. Agencement selon l'une quelconque des revendications 1 à 11, comprenant un insert (250) qui est réalisé de telle sorte qu'il puisse être retenu dans le cadre (201).

13. Agencement selon la revendication 12, **caractérisé en ce que** l'insert (250) présente des éléments d'appui (253), qui, lorsque le cadre (201) est monté et que l'insert (250) est retenu dans le cadre (201), sont disposés entre l'appui (224) pour le couvercle (206) et le couvercle (206).

14. Procédé de montage d'un cadre dans une ouverture de fond selon un agencement selon l'une quelconque des revendications 1 à 11, dans lequel le cadre est inséré dans l'ouverture de fond en utilisant un adhésif de telle sorte que l'adhésif soit en contact avec la surface d'enveloppe du cadre et la paroi interne de l'ouverture de fond, l'adhésif étant introduit au moins en partie dans la rainure de collage.

15. Procédé selon la revendication 14 pour le montage d'un cadre dans une ouverture de fond selon l'agencement de la revendication 6, dans lequel, lors de l'insertion du cadre dans l'ouverture de fond, le côté inférieur de la butée est amené en contact avec l'ouverture de fond.

16. Cadre comprenant un couvercle (106) pour un agencement selon l'une quelconque des revendications 1 à 13, dans lequel le cadre (101) est pourvu d'un passage (22, 122) qui, lorsque le cadre (101) est monté, forme un accès à l'ouverture de fond (102) pouvant être fermé avec le couvercle (106), un côté supérieur (106.2) du couvercle (106), lorsque le passage (22, 122) est fermé, étant disposé essentiellement de manière coplanaire à la surface de fond (107.1) présentant l'ouverture de fond (102), et le cadre (101) présentant une surface d'enveloppe (21, 121) située à l'extérieur par rapport au passage (22, 122), sur laquelle est réalisée une contre-dépouille en forme de rainure (33, 133) dans la direction de montage, **caractérisé en ce que** la rainure est une rainure de collage qui, pour recevoir un adhésif pour le collage du cadre (101) sur sa surface d'enveloppe (21, 121), est pourvue d'une paroi interne (102.1) de l'ouverture de fond (102) et la rainure (33, 133) peut venir en prise autour de l'adhésif de telle sorte que le cadre soit ancré fermement dans l'adhésif lorsque l'adhésif a pris, et un dispositif de retenue de montage (27, 127) formé de manière imperdable sur le cadre (101), qui comprend une bride réalisée en tant que butée, de telle sorte que lorsque le cadre (101) est monté, le côté inférieur (30, 130) de la bride (27, 127) repose sur la surface de fond (107.1) et qui peut retenir le cadre (101) pendant le montage, et en particulier pendant la prise de l'adhésif, dans l'ouverture de fond (102), mais est réalisé de manière suffisamment mince pour ne pas être porteur en définitive, et une épaisseur maximale de la bride ne dépassant pas 1 mm.

17. Ensemble d'installation pour un agencement selon l'une quelconque des revendications 1 à 13, comprenant :
un cadre (101) avec un couvercle (106) pour le montage dans une ouverture de fond (402), le cadre (101) pouvant être réalisé pour retenir un insert (250), comprenant un passage (22, 122) qui, lorsque le cadre (101) est monté, forme un accès à l'ouverture de fond (102) pouvant être fermé par le couvercle (106), un côté supérieur (106.2) du couvercle (106), lorsque le passage (22, 122) est fermé, pouvant être disposé de manière essentiellement coplanaire à la surface de fond (107.1) présentant l'ouverture de fond (102), et le cadre (101) présentant une surface d'enveloppe (21, 121) située à l'extérieur par rapport au passage (22, 122), sur laquelle, dans la direction de montage, est réalisée une contre-dépouille en forme de rainure (33, 133),
**caractérisé en ce**
**qu'**un dispositif de retenue de montage (27, 127) formé de manière imperdable sur le cadre (101), qui comprend une bride réalisée en tant que butée, de telle sorte que le côté inférieur (30, 130) de la bride (27, 127) repose sur la surface de fond (107.1) lorsque le cadre (101) est monté, et qui peut retenir le cadre (101) dans l'ouverture de fond (102) pendant le montage, et en particulier pendant la prise de l'adhésif, mais qui est réalisé de manière suffisamment mince pour ne pas être porteur en définitive, et une épaisseur maximale de la bride ne dépassant pas 1 mm, et en ce que l'ensemble d'installation comprend un auxiliaire d'installation (470) qui, pour créer l'ouverture de fond (402) appropriée pour le cadre (101), maintient libre un évidement correspondant lors de l'installation d'un fond de base (407.2).
